(19) Europäisches Patentamt
European Patent Office
Office européen des brevets

(11) **EP 4 468 792 A1**

(12) **EUROPEAN PATENT APPLICATION**
published in accordance with Art. 153(4) EPC

(43) Date of publication:
**27.11.2024   Bulletin 2024/48**

(21) Application number: **23777958.2**

(22) Date of filing: **22.03.2023**

(51) International Patent Classification (IPC):
***H04W 52/02*** (2009.01)

(52) Cooperative Patent Classification (CPC):
**H04W 52/02;** Y02D 30/70

(86) International application number:
**PCT/CN2023/083108**

(87) International publication number:
**WO 2023/185587 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022   CN 202210326121**

(71) Applicant: **Huawei Technologies Co., Ltd.
Shenzhen, Guangdong 518129 (CN)**

(72) Inventors:
• **FENG, Shulan**
  **Shenzhen, Guangdong 518129 (CN)**
• **LEI, Zhendong**
  **Shenzhen, Guangdong 518129 (CN)**
• **WANG, Shuhui**
  **Shenzhen, Guangdong 518129 (CN)**
• **XU, Han**
  **Shenzhen, Guangdong 518129 (CN)**

(74) Representative: **Grünecker Patent- und
Rechtsanwälte
PartG mbB
Leopoldstraße 4
80802 München (DE)**

(54) **METHOD FOR WAKING UP DEVICE, AND COMMUNICATION APPARATUS**

(57)    A device wake-up method and a communication apparatus are provided. The method includes: A first device determines wake-up information, where the wake-up information is used for waking up a second device, or is used for not waking up a second device; determines a wake-up sequence based on the wake-up information; and sends the wake-up sequence to the second device on a wake-up signal receiving occasion of the second device, where each bit of the wake-up sequence is modulated into one or more low power wake-up symbols through on-off keying, the wake-up signal receiving occasion includes a wake-up signal receiving occasion frequency domain resource, and the wake-up signal receiving occasion frequency domain resource is adjacent to an edge of a transmission bandwidth of the first device in frequency domain. A frequency domain resource occupied for transmitting a low power wake-up symbol is adjacent to the edge of the transmission bandwidth of the first device in frequency domain, so that impact of transmitting the low power wake-up symbol on spectrum efficiency of a primary communication link can be reduced, thereby helping ensure compatibility between a link for transmitting the low power wake-up symbol and the primary communication link.

FIG. 4

**Description**

This application claims priority to Chinese Patent Application No. 202210326121.X, filed with the China National Intellectual Property Administration on March 30, 2022 and entitled "DEVICE WAKE-UP METHOD AND COMMUNICATION APPARATUS", which is incorporated herein by reference in its entirety.

**TECHNICAL FIELD**

This application relates to the communication field, and in particular, to a device wake-up method and a communication apparatus.

**BACKGROUND**

To meet low power and high-speed transmission requirements of the internet of things, a design of a dual-wireless apparatus is introduced in a wireless system. For example, one terminal device includes two wireless apparatuses: a primary wireless apparatus and a secondary wireless apparatus respectively. Generally, the primary wireless apparatus is off, and the secondary wireless apparatus may detect a wake-up signal from another device. When the wake-up signal indicates that the primary wireless apparatus needs to be woken up, the primary wireless apparatus is woken up to communicate with the another device, so that power consumption of the terminal device can be reduced. In a process of communication between an access network device and a terminal device, a wake-up signal is transmitted on a low power wake-up signal (low power wake-up signal, LP-WUS) air interface link (which is an LP-WU link for short), and another signal is transmitted on a primary communication air interface link (which is a primary communication link for short). An existing released low power wake-up standard is the institute of electrical and electronics engineers (institute of electrical and electronics engineers, IEEE) 802.11ba standard. In the standard, in a channel bandwidth of 20 megahertz (MHz), center 4 MHz is used for transmitting a low power wake-up signal, and the remaining 16 MHz is a guard band.

Currently, in the 3rd generation partnership project (3rd generation partnership project, 3GPP) standard, it is proposed to use a low power wake-up technology in a cellular mobile communication system (which is a cellular system for short), to reduce power consumption of a wireless device connected to a cellular network. However, in the cellular system, if a design similar to that of a wake-up signal in IEEE 802. 1 1ba is used, a link used for transmitting a wake-up signal causes great impact on spectrum efficiency of a primary communication link. For example, spectrum efficiency is low. Consequently, costs of introducing the wake-up signal are high.

Therefore, it is urgent to provide a device wake-up method, to reduce impact of introducing a wake-up signal on spectrum efficiency of a primary communication link, and ensure compatibility between a link used for transmitting the wake-up signal and the primary communication link.

**SUMMARY**

This application provides a device wake-up method and a communication apparatus, expecting to reduce impact of introducing a wake-up signal on spectrum efficiency of a primary communication link, and ensure compatibility between a link used for transmitting the wake-up signal and the primary communication link.

According to a first aspect, this application provides a device wake-up method. The method may be performed by a first device, or may be performed by a component (for example, a chip or a chip system) configured in the first device, or may be implemented by a logical module or software that can implement all or some functions of the first device. This is not limited in this application.

The first device may be an access network device or a core network device.

For example, the method includes: The first device determines wake-up information, where the wake-up information is used for waking up a second device, or is used for not waking up a second device; the first device determines a wake-up sequence based on the wake-up information, where the wake-up sequence is a binary bit sequence; and the first device sends the wake-up sequence to the second device on a wake-up signal receiving occasion of the second device, where each bit of the wake-up sequence is modulated into one or more low power wake-up (low power wake-up, LP-WU) symbols through on-off keying (on-off keying, OOK), the wake-up signal receiving occasion includes a wake-up signal receiving occasion frequency domain resource, and the wake-up signal receiving occasion frequency domain resource is adjacent to an edge of a transmission bandwidth of the first device in frequency domain.

That the wake-up information is used for waking up the second device, or is used for not waking up the second device may be understood as that the wake-up information is used for waking up a primary wireless apparatus in the second device, or is used for not waking up a primary wireless apparatus in the second device.

According to the foregoing technical solution, the first device determines the wake-up information, that is, determines whether to wake up the second device; determines, based on the wake-up information, the wake-up sequence corresponding to the wake-up information; and modulates the wake-up sequence into the one or more LP-WU symbols, and sends the one or more LP-WU symbols. A frequency domain resource occupied for sending the LP-WU symbol is adjacent to the edge of the transmission bandwidth of the first device in frequency domain. Being adjacent to the edge of the transmission bandwidth of the first device in frequency domain may be understood as being adjacent to a high frequency part or a low frequency part of the transmission bandwidth of the first device. In this way, impact of transmitting the LP-WU symbol on the transmission bandwidth of the first device (namely, a bandwidth corresponding to a primary communication link of the first device) can be reduced, thereby helping ensure compatibility between a link for transmitting the LP-WU symbol (namely, an LP-WU link) and the primary communication link.

With reference to the first aspect, in some possible implementations of the first aspect, duration of one of the one or more LP-WU symbols is T1, and duration of a symbol that is of a primary communication link of the first device and that overlaps the LP-WU symbol in time domain is N*T1, where N is an integer greater than or equal to 1.

With reference to the first aspect, in some possible implementations of the first aspect, a signal is sent on a transmit symbol (an ON symbol) in the one or more LP-WU symbols through orthogonal frequency division multiplexing (orthogonal frequency division multiplexing, OFDM) modulation, and no signal is sent on a stop symbol (an OFF symbol) in the one or more LP-WU symbols.

Because OFDM modulation is used for signals on both the LP-WU link and the primary communication link, duration of a symbol that is of the primary communication link of the first device and that overlaps the LP-WU symbol in time domain is designed as an integer multiple of the duration of the LP-WU symbol, so that when the primary communication link and the LP-WU link are frequency-division-multiplexed, inter-symbol interference and inter-subcarrier interference between the primary communication link and the LP-WU link can be effectively reduced. In addition, the foregoing design may enable the first device and the second device to use a same timing relationship as much as possible, thereby simplifying designs of the first device and the second device.

With reference to the first aspect, in some possible implementations of the first aspect, the wake-up signal receiving occasion frequency domain resource is located in a system bandwidth of the first device; and there is no guard band between the wake-up signal receiving occasion frequency domain resource and the edge of the transmission bandwidth of the first device.

The wake-up signal receiving occasion frequency domain resource is adjacent to the edge of the transmission bandwidth of the first device. For example, the wake-up signal receiving occasion frequency domain resource may be located on an inner side of the edge of the transmission bandwidth of the first device, or located on an outer side of the edge of the transmission bandwidth of the first device. When the wake-up signal receiving occasion frequency domain resource is located on the outer side of the edge of the transmission bandwidth of the first device, the wake-up signal receiving occasion frequency domain resource is further located in the system bandwidth of the first device, to avoid interference of another system adj acent to the system bandwidth of the first device. In addition, the guard band may not be disposed between the wake-up signal receiving occasion frequency domain resource and the edge of the transmission bandwidth of the first device. This helps save a frequency.

With reference to the first aspect, in some possible implementations of the first aspect, the wake-up signal receiving occasion further includes a wake-up signal receiving occasion time domain resource, the wake-up signal receiving occasion time domain resource includes a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the first device.

The first time domain resource and the second time domain resource do not overlap in time domain, and the frequency domain resource of the wake-up signal receiving occasion in the first time domain resource and the frequency domain resource of the wake-up signal receiving occasion in the second time domain resource are respectively located on the two sides of the edge of the transmission bandwidth of the first device. The two sides of the edge of the transmission bandwidth of the first device may be understood as that frequencies corresponding to the frequency domain resource in the first time domain resource and the frequency domain resource in the second time domain resource are greater than a highest value of a frequency of the transmission bandwidth of the first device, or less than a lowest value of the frequency of the transmission bandwidth of the first device. In other words, in the foregoing process, the wake-up signal receiving occasion is mapped to different physical frequencies on different time domain resources, that is, performs frequency hopping based on a specific slot spacing. For example, the frequency domain resource in the first time domain resource is located on one side of the edge of the transmission bandwidth of the first device (for example, the frequency is greater than the highest value of the frequency of the transmission bandwidth of the first device), and the frequency domain resource in the second time domain resource is located on the other side of the edge of the transmission bandwidth of the first device (the frequency is less than the lowest value of the frequency of the transmission bandwidth of the first device). This manner helps better resist frequency-selective fading.

With reference to the first aspect, in some possible implementations of the first aspect, that the first device determines a wake-up sequence based on the wake-up information includes: The first device determines a correspondence between at least one wake-up sequence and at least one piece of wake-up information; and the first device determines the wake-up sequence based on the wake-up information and the correspondence between the at least one wake-up sequence and the at least one piece of wake-up information.

The first device may determine the at least one wake-up sequence, and each wake-up sequence corresponds to one type of wake-up information. After determining the wake-up information of the first device, the first device determines, with reference to the correspondence between the wake-up information and the wake-up sequence, the wake-up sequence corresponding to the wake-up information that needs to be sent.

With reference to the first aspect, in some possible implementations of the first aspect, the correspondence between the at least one wake-up sequence and the at least one type of wake-up information is related to an identity of a cell in which the first device is located.

In other words, the correspondence between the wake-up sequence and the wake-up information of the cell in which the first device is located may be different from a correspondence of a neighboring cell, so that interference of a signal sent between cells can be reduced. For example, interference of data carried in the wake-up sequence can be reduced, thereby improving data receiving reliability.

With reference to the first aspect, in some possible implementations of the first aspect, the at least one wake-up sequence is determined based on a same basic sequence, and a length of the basic sequence is M*12 or a length of the basic sequence is K*14, where M and K are integers greater than or equal to 1.

The at least one wake-up sequence is determined based on the same basic sequence, so that complexity of designing the wake-up sequence can be reduced, and complexity of receiving the wake-up sequence by the second device can also be reduced. The length of the basic sequence is an integer multiple of 12 or 14. In this way, a length of the wake-up sequence is also an integer multiple of 12 or 14. It may be understood that, on the primary communication link, one slot includes 12 OFDM symbols or 14 OFDM symbols, and the length of the wake-up sequence is designed to be the integer multiple of 12 or 14, so that a waste of resources can be reduced when the LP-WU link and the primary communication link are time-division-multiplexed.

With reference to the first aspect, in some possible implementations of the first aspect, when the length of the basic sequence is 12 bits, the basic sequence is [001 001 110 101], [001 111 001 010], [010 001 111 001], [010 100 111 100], [010 110 001 101], [010 110 100 011], or [010 111 001 001]; when the length of the basic sequence is 14 bits, the basic sequence is [010 101 111 001 00]; when the length of the basic sequence is 24 bits, the basic sequence is [010 101 100 100 101 111 000 110], [111 011 000 100 100 111 000 101], or [110 010 101 111 000 010 010 011]; when the length of the basic sequence is 28 bits, the basic sequence is [010 001 101 111 011 000 011 100 010 1]; or when the length of the basic sequence is 36 bits, the basic sequence is [101 101 010 010 011 010 011 001 110 000 011 101] or [110 110 000 100 011 101 010 010 111 001 011 100]. A quantity of 0s and a quantity of 1s in the foregoing basic sequence provided in this application are equal. This helps ensure power balance of the wake-up sequence in transmission time. In addition, in comparison with another binary sequence of a same length, the basic sequence provided in this application is with better noise resistance performance and an autocorrelation feature, so that better wake-up signal detection performance can be provided.

With reference to the first aspect, in some possible implementations of the first aspect, the basic sequence is a pseudo-random sequence, and an initial value of the pseudo-random sequence is related to one or more of the following: the cell identity of the first device, a radio access network identity of the first device, a tracking area identity of the first device, an LP-WU identity of the second device, or a state of the second device.

The first device may generate the basic sequence by using the pseudo-random sequence. The initial value of the pseudo-random sequence is related to the foregoing parameter. In other words, the first device may determine the initial value of the pseudo-random sequence based on the foregoing parameter. This provides a possible implementation for generating the basic sequence, and helps improve flexibility of generating the basic sequence.

With reference to the first aspect, in some possible implementations of the first aspect, when the LP-WU symbol is an ON symbol, the first device sends, on the LP-WU symbol, an OFDM signal whose subcarrier spacing is a first spacing, where the first spacing is an integer multiple of an OFDM subcarrier spacing that is of the primary communication link of the first device and that is adjacent to a frequency domain resource that carries the OFDM signal; and/or when the LP-WU symbol is an OFF symbol, the first device skips sending a signal.

The subcarrier spacing of the OFDM signal sent by using the LP-WU symbol is the integer multiple of the OFDM subcarrier spacing that is of the primary communication link of the first device and that is adjacent to the frequency domain resource that carries the OFDM signal. This helps reduce interference caused by transmitting the LP-WU symbol to the primary communication link, helps ensure compatibility between the LP-WU link and the primary communication link, and improves spectrum efficiency.

With reference to the first aspect, in some possible implementations of the first aspect, the method further includes: The first device determines a transmission resource of a third device, where the transmission resource of the third device includes the wake-up signal receiving occasion of the second device; the first device sends indication information to the third device, where the indication information indicates a resource element that carries a modulation signal of the third device on the wake-up signal receiving occasion of the second device, and a resource element when the LP-WU symbol is the ON symbol is the resource element that carries the modulation signal of the third device; and/or the indication information indicates a resource element that does not carry a modulation signal of the third device on the wake-up signal receiving occasion of the second device, and a resource element when the LP-WU symbol is the OFF symbol is the resource element that does not carry the modulation signal of the third device; and the first device sends the modulation signal of the third device on the resource element when the LP-WU symbol is the ON symbol; and/or the first device skips sending the modulation signal of the third device on the resource element when the LP-WU symbol is the OFF symbol.

When sending the wake-up sequence to the second device, the first device may carry the modulation signal sent to the third device, to help improve spectrum utilization. Further, the first device may determine a resource element that carries the modulation signal of the third device on the wake-up signal receiving occasion and/or a resource element that does not carry the modulation signal of the third device on the wake-up signal receiving occasion, and indicate the resource element to the third device, to help improve performance of receiving the modulation signal by the third device.

According to a second aspect, this application provides a device wake-up method. The method may be performed by a second device, or may be performed by a component (for example, a chip or a chip system) configured in the second device, or may be implemented by a logical module or software that can implement all or some functions of the second device. This is not limited in this application.

The second device may be a terminal device.

For example, the method includes: The second device receives a wake-up sequence from a first device on a wake-up signal receiving occasion, where the wake-up sequence is a binary bit sequence, each bit of the wake-up sequence is modulated into one or more LP-WU symbols through OOK, the wake-up signal receiving occasion includes a wake-up signal receiving occasion frequency domain resource, and the wake-up signal receiving occasion frequency domain resource is adjacent to an edge of a transmission bandwidth of the first device in frequency domain; and the second device determines wake-up information based on the wake-up sequence, where the wake-up information is used for waking up the second device, or is used for not waking up the second device.

According to the foregoing technical solution, the second device may receive the wake-up sequence on the wake-up signal receiving occasion, and determine the wake-up information corresponding to the wake-up sequence. A frequency domain resource occupied for transmitting the wake-up sequence is adjacent to the edge of the transmission bandwidth of the first device in frequency domain, so that impact of transmitting the wake-up sequence on spectrum efficiency of a primary communication link can be reduced, thereby helping ensure compatibility between a link (namely, an LP-WU link) for transmitting the wake-up sequence and the primary communication link.

With reference to the second aspect, in some possible implementations of the second aspect, duration of one of the one or more LP-WU symbols is T1, and duration of a symbol that is of a primary communication link of the first device and that overlaps the LP-WU symbol in time domain is N*T1, where N is an integer greater than or equal to 1.

Because OFDM is used for signals on both the LP-WUS link and the primary communication link, duration of a symbol that is of the primary communication link of the first device and that overlaps the LP-WU symbol in time domain is designed as an integer multiple of the duration of the LP-WU symbol, so that when the primary communication link and the LP-WU link are frequency-division-multiplexed, inter-symbol interference and inter-subcarrier interference between the primary communication link and the LP-WU link can be effectively reduced. In addition, the foregoing design enables the first device and the second device to use a same timing relationship as much as possible, thereby simplifying designs of the first device and the second device.

With reference to the second aspect, in some possible implementations of the second aspect, the wake-up signal receiving occasion frequency domain resource is located in a system bandwidth of the first device; and there is no guard band between the wake-up signal receiving occasion frequency domain resource and the edge of the transmission bandwidth of the first device.

The wake-up signal receiving occasion frequency domain resource is adjacent to the edge of the transmission bandwidth of the first device, for example, may be located on an inner side of the edge of the transmission bandwidth of the first device, or located on an outer side of the edge of the transmission bandwidth of the first device. When the wake-up signal receiving occasion frequency domain resource is located on the outer side of the edge of the transmission bandwidth of the first device, the wake-up signal receiving occasion frequency domain resource is further located in the system bandwidth of the first device. In addition, there is no guard band between the wake-up signal receiving occasion frequency domain resource and the edge of the transmission bandwidth of the first device. This helps save a frequency.

With reference to the second aspect, in some possible implementations of the second aspect, the wake-up signal receiving occasion further includes a wake-up signal receiving occasion time domain resource, the wake-up signal receiving occasion time domain resource includes a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the first device.

The first time domain resource and the second time domain resource do not overlap in time domain, and the frequency domain resource of the wake-up signal receiving occasion in the first time domain resource and the frequency domain resource of the wake-up signal receiving occasion in the second time domain resource are respectively located on the two sides of the edge of the transmission bandwidth of the first device. The two sides of the edge of the transmission bandwidth of the first device may be understood as that frequencies corresponding to the frequency domain resource in the first time domain resource and the frequency domain resource in the second time domain resource are greater than a highest value of a frequency of the transmission bandwidth of the first device, or less than a lowest value of the frequency of the transmission bandwidth of the first device. In other words, in the foregoing process, the wake-up signal receiving occasion is mapped to different physical frequencies on different time domain resources, that is, performs frequency hopping based on a specific slot spacing. For example, the frequency domain resource in the first time domain resource is located on one side of the edge of the transmission bandwidth of the first device (for example, the frequency is greater than the highest value of the frequency of the transmission bandwidth of the first device), and the frequency domain resource in the second time domain resource is located on the other side of the edge of the transmission bandwidth of the first device (the frequency is less than the lowest value of the frequency of the transmission bandwidth of the first device). This manner helps better resist frequency-selective fading.

With reference to the second aspect, in some possible implementations of the second aspect, that the second device determines wake-up information based on the wake-up sequence includes: The second device determines a correspondence between at least one wake-up sequence and at least one piece of wake-up information; and the second device determines the wake-up information based on the wake-up sequence and the correspondence between the at least one wake-up sequence and the at least one piece of wake-up information.

The second device may determine the correspondence between the at least one wake-up sequence and the at least one type of wake-up information. After receiving the wake-up sequence, the second device determines, with reference to the correspondence between the wake-up information and the wake-up sequence, the wake-up information corresponding to the wake-up sequence, to wake up or not wake up the second device.

With reference to the second aspect, in some possible implementations of the second aspect, the correspondence between the at least one wake-up sequence and the at least one type of wake-up information is related to an identity of a cell in which the first device is located.

In other words, the correspondence between the wake-up sequence and the wake-up information of the cell in which the first device is located may be different from a correspondence of a neighboring cell, so that interference of a signal sent between cells can be reduced. For example, interference of data carried in the wake-up sequence can be reduced, thereby improving data receiving reliability.

With reference to the second aspect, in some possible implementations of the second aspect, the at least one wake-up sequence is determined based on a same basic sequence, and a length of the basic sequence is M* 12 or a length of the basic sequence is K* 14, where M and K are integers greater than or equal to 1.

The at least one wake-up sequence is determined based on the same basic sequence, so that complexity of designing the wake-up sequence can be reduced, and complexity of receiving the wake-up sequence by the second device can also be reduced. The length of the basic sequence is an integer multiple of 12 or 14. In this way, a length of the wake-up sequence is also an integer multiple of 12 or 14. It may be understood that, on the primary communication link, one slot includes 12 OFDM symbols or 14 OFDM symbols, and the length of the wake-up sequence is designed to be the integer multiple of 12 or 14, so that a waste of resources can be reduced when the LP-WU link and the primary communication link are time-division-multiplexed.

With reference to the second aspect, in some possible implementations of the second aspect, when the length of the basic sequence is 12 bits, the basic sequence is [001 001 110 101], [001 111 001 010], [010 001 111 001], [010 100 111 100], [010 110 001 101], [010 110 100 011], or [010 111 001 001]; when the length of the basic sequence is 14 bits, the basic sequence is [010 101 111 001 00]; when the length of the basic sequence is 24 bits, the basic sequence is [010 101 100 100 101 111 000 110], [111 011 000 100 100 111 000 101], or [110 010 101 111 000 010 010 011]; when the length of the basic sequence is 28 bits, the basic sequence is [010 001 101 111 011 000 011 100 010 1]; or when the length of the basic sequence is 36 bits, the basic sequence is [101 101 010 010 011 010 011 001 110 000 011 101] or [110 110 000 100 011 101 010 010 111 001 011 100]. A quantity of 0s and a quantity of 1s in the foregoing basic sequence provided in this application are equal. This helps ensure power balance of the wake-up sequence in transmission time. In addition, in comparison with another binary sequence of a same length, the basic sequence provided in this application is with better noise resistance performance and an autocorrelation feature, so that better wake-up signal detection performance can be provided.

With reference to the second aspect, in some possible implementations of the second aspect, the basic sequence is a pseudo-random sequence, and an initial value of the pseudo-random sequence is related to one or more of the following: the cell identity of the first device, a radio access network identity of the first device, a tracking area identity of the first device, an LP-WU identity of the second device, or a state of the second device.

The basic sequence may be generated by using the pseudo-random sequence. The initial value of the pseudo-random sequence is related to the foregoing parameter. In other words, the initial value of the pseudo-random sequence may be determined based on the foregoing parameter. This provides a possible implementation for generating the basic sequence, and helps improve flexibility of generating the basic sequence.

According to a third aspect, this application provides a device wake-up method. The method may be performed by a third device, or may be performed by a component (for example, a chip or a chip system) configured in the third device, or may be implemented by a logical module or software that can implement all or some functions of the third device. This is not limited in this application.

The third device may be a terminal device.

For example, the method includes: A third device receives indication information, where the indication information indicates a resource element that carries a modulation signal of the third device, and/or the indication information indicates a resource element that does not carry a modulation signal of the third device; and the resource element is located on a wake-up signal receiving occasion of a second device; and the third device receives the modulation signal of the third device from a first device based on the indication information.

According to the foregoing technical solution, the third device may receive the indication information from the first device, to determine the resource element that is on the wake-up signal receiving occasion and that carries the modulation signal of the third device and the resource element that is on the wake-up signal receiving occasion and that does not carry the modulation signal of the third device, and receive the modulation signal from the first device based on the indication information, to help improve performance of receiving the modulation signal by the third device.

According to a fourth aspect, this application provides a device wake-up method. The method may be performed by a first device, or may be performed by a component (for example, a chip or a chip system) configured in the first device, or may be implemented by a logical module or software that can implement all or some functions of the first device. This is not limited in this application.

The first device may be an access network device or a terminal device.

For example, the method includes: The first device determines wake-up information, where the wake-up information is used for waking up a second device, or is used for not waking up a second device; the first device determines a wake-up sequence based on the wake-up information, where the wake-up sequence is a binary bit sequence, and the wake-up sequence is generated based on a basic sequence; and the first device sends the wake-up sequence to a second device on a wake-up signal receiving occasion of the second device, where when a length of the basic sequence is 12 bits, the basic sequence is [001 001 110 101], [001 111 001 010], [010 001 111 001], [010 100 111 100], [010 110 001 101], [010 110 100 011], or [010 111 001 001]; when a length of the basic sequence is 14 bits, the basic sequence is [010 101 111 001 00]; when a length of the basic sequence is 24 bits, the basic sequence is [010 101 100 100 101 111 000 110], [111 011 000 100 100 111 000 101], or [110 010 101 111 000 010 010 011]; when a length of the basic sequence is 28 bits, the basic sequence is [010 001 101 111 011 000 011 100 010 1]; or when a length of the basic sequence is 36 bits, the basic sequence is [101 101 010 010 011 010 011 001 110 000 011 101] or [110 110 000 100 011 101 010 010 111 001 011 100].

According to the foregoing technical solution, the first device may generate the wake-up sequence based on the foregoing basic sequences of different lengths. It may be learned that the lengths of the foregoing basic sequences are all integer multiples of 12 or 14. In this way, the length of the wake-up sequence is also an integer multiple of 12 or 14. On a primary communication link, one slot includes 12 OFDM symbols or 14 OFDM symbols, and the length of the wake-up sequence is designed to be the integer multiple of 12 or 14, so that a waste of resources can be reduced when an LP-WU link and the primary communication link are time-division-multiplexed. In addition, a quantity of 0s and a quantity of 1s in the foregoing basic sequence provided in this application are equal. This helps ensure power balance of the wake-up sequence in transmission time. In comparison with another binary sequence of a same length, the basic sequence provided in this application is with better noise resistance performance and an autocorrelation feature, so that better wake-up signal detection performance can be provided.

According to a fifth aspect, this application provides a communication apparatus, so that the method according to any one of the first aspect and the possible implementations of the first aspect can be implemented, or the method according to the fourth aspect can be implemented. The apparatus includes a corresponding unit configured to perform the foregoing method. The unit included in the apparatus may be implemented by software and/or hardware.

According to a sixth aspect, this application provides a communication apparatus. The apparatus includes a processor. The processor is coupled to a memory, and may be configured to execute a computer program in the memory, to implement the method according to any one of the first aspect and the possible implementations of the first aspect, or implement the method according to the fourth aspect.

According to a seventh aspect, this application provides a communication apparatus, so that the method according to any one of the second aspect and the possible implementations of the second aspect can be implemented. The apparatus includes a corresponding unit configured to perform the foregoing method. The unit included in the apparatus may be implemented by software and/or hardware.

According to an eighth aspect, this application provides a communication apparatus. The apparatus includes a processor. The processor is coupled to a memory, and may be configured to execute a computer program in the memory, to implement the method according to any one of the second aspect and the possible implementations of the second aspect.

According to a ninth aspect, this application provides a communication apparatus, so that the method according to the third aspect can be implemented. The apparatus includes a corresponding unit configured to perform the foregoing method. The unit included in the apparatus may be implemented by software and/or hardware.

According to a tenth aspect, this application provides a communication apparatus. The apparatus includes a processor. The processor is coupled to a memory, and may be configured to execute a computer program in the memory, to implement the method according to the third aspect.

According to an eleventh aspect, this application provides a computer-readable storage medium. The computer-readable storage medium stores a computer program or instructions. When the computer program or the instructions is/are executed, the method according to any one of the first aspect and the possible implementations of the first aspect is implemented, or the method according to any one of the second aspect and the possible implementations of the second aspect is implemented, or the method according to the third aspect is implemented, or the method according to the fourth aspect is implemented.

According to a twelfth aspect, this application provides a computer program product. The computer program product includes instructions. When the instructions are run, the method according to any one of the first aspect and the possible implementations of the first aspect is implemented, or the method according to any one of the second aspect and the possible implementations of the second aspect is implemented, or the method according to the third aspect is implemented, or the method according to the fourth aspect is implemented.

According to a thirteenth aspect, this application provides a chip system. The chip system includes a processor, and may further include a memory, configured to implement the method according to any one of the first aspect and the possible implementations of the first aspect, or implement the method according to any one of the second aspect and the possible implementations of the second aspect, or implement the method according to the third aspect, or implement the method according to the fourth aspect. The chip system may include a chip, or may include a chip and another discrete component.

It should be understood that, the technical solutions of the fifth aspect to the thirteenth aspect of this application correspond to the technical solutions of the first aspect to the fourth aspect of this application, and beneficial effects achieved in the aspects and corresponding feasible implementations are similar. Details are not described again.

**BRIEF DESCRIPTION OF DRAWINGS**

FIG. 1 is a diagram of a relationship between bandwidths according to an embodiment of this application;

FIG. 2 is a diagram of a system architecture to which a method according to an embodiment of this application is applicable.

FIG. 3 is a diagram of an architecture of an access network device and a terminal device according to an embodiment of this application;

FIG. 4 is a schematic flowchart of a device wake-up method according to an embodiment of this application;

FIG. 5 is a diagram of a process in which a first device determines a wake-up sequence according to an embodiment of this application;

FIG. 6 to FIG. 8 are diagrams of positions of wake-up signal receiving occasion frequency domain resources according to an embodiment of this application;

FIG. 9 is a diagram of a guard band according to an embodiment of this application;

FIG. 10 is a diagram of a length of an LP-WU symbol according to an embodiment of this application;

FIG. 11 and FIG. 12 are diagrams of numbers of transmission channels used for transmitting wake-up signals according to an embodiment of this application;

FIG. 13 is a diagram of a frequency hopping manner according to an embodiment of this application;

FIG. 14 is a diagram of a wake-up signal receiving occasion frame according to an embodiment of this application;

FIG. 15 is a diagram of a wake-up signal receiving occasion according to an embodiment of this application;

FIG. 16 is another schematic flowchart of a device wake-up method according to an embodiment of this application;

FIG. 17 is a diagram of a transmission resource of a modulation signal of a third device according to an embodiment of this application; and

FIG. 18 and FIG. 21 are diagrams of structures of possible communication apparatuses according to embodiments of this application.

**DESCRIPTION OF EMBODIMENTS**

The following describes technical solutions of this application with reference to accompanying drawings.

First, the following describes in detail network elements in embodiments of this application: an access network device and a terminal device. Optionally, the network elements in embodiments of this application may further include a core network device.

1. Access network (access network, AN) device: The access network may provide a network access function for an authorized user in a specific area, and can use transmission tunnels of different quality based on user levels, service requirements, and the like. An access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in a 5G system is referred to as a next generation NodeB (next generation node base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements an access network function based on a wireless communication technology may be referred to as a radio access network (radio access network, RAN). The radio access network can manage radio resources, and provide an access service for the terminal device, to complete forwarding of a control signal and user data between the terminal and a core network.

A radio access network device may include, for example, but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like, or may be a gNB or a transmission point (a TRP or a TP) in a 5G (for example, NR) system, or one or one group of antenna panels (including a plurality of antenna panels) of a base station in a 5G system, or may be a network node constituting a gNB or a transmission point, for example, a baseband unit (BBU), a distributed unit (distributed unit, DU), or a base station in a next generation communication 6G system.

It should be understood that, for ease of description, the radio access network device is an access network device for short in this application. Unless otherwise specified, the access network device in embodiments of this application is the radio access network device.

2. Terminal device: The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or accessories of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application function and need to be used together with other devices such as smartphones, such as various smart bands or smart jewelry used for monitoring physical signs.

In addition, the terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and terminal power saving can be implemented by using, for example, a narrowband (narrowband, NB) technology.

In addition, the terminal device may alternatively include a sensor such as an intelligent printer, a train detector, or a gas station, and main functions of the terminal device include collecting data (for some terminal devices), receiving control information and downlink data of a network device, sending an electromagnetic wave, and transmitting uplink data to the network device.

3. Core network device: The core network is located in a network subsystem, and the core network can connect a call request or a data request from an A interface to different networks. The core network device may include, for example, but is not limited to, an access and mobility management function network element (access and mobility management function, AMF), a session management function network element (session management function, SMF), a user plane function network element (user plane function, UPF), or the like. The network elements may be configured to implement respective functions. For example, the AMF may be configured to perform mobility management and access management. The SMF may be configured to manage a session, allocate and manage an internet protocol (internet protocol, IP) address of the terminal device, select and manage a user plane function, perform policy control, or be used for a termination point of a charging function interface, be used for downlink data notification, and the like. The UPF may be configured to perform packet routing and forwarding, perform quality of service (quality of service, QoS) processing on user plane data, or the like.

It should be understood that specific forms of the access network device, the terminal device, and the core network device are not limited in embodiments of this application. In addition, in embodiments of this application, the core network device may communicate with the terminal device through the access network device, for example, may receive information from the terminal device through the access network device.

In addition, to describe a device wake-up method provided in embodiments of this application more clearly, some terms in embodiments of this application are explained.

1. OOK modulation: is also referred to as binary amplitude keying. In this modulation manner, modulation information is indicated by whether a signal is sent, where ON indicates that a signal is sent, and OFF indicates that no signal is sent. When a signal is modulated through OOK, each bit (generally, an encoded bit) is modulated to a signal of one symbol (symbol). One symbol may also be referred to as a chip (chip), or may be referred to as another name. This is not limited in embodiments of this application. For ease of distinguishing, the symbol is referred to as an OOK symbol below.

For example, when a bit (bit) is 1, a signal is sent in a length of the OOK symbol (that is, a signal transmit power in the length of the OOK symbol is not 0); or when a bit is 0, no signal is sent in a length of the OOK symbol (that is, a signal transmit power in the length of the OOK symbol is 0). In other words, in OOK modulation, if energy is sent, it indicates that the bit is 1; or if no energy is sent, it indicates that the bit is 0. On the contrary, for example, when a signal is sent in a length of one OOK symbol, it indicates that an information bit of the OOK symbol is 0; or when no signal is sent in a length of one OOK symbol, it indicates that an information bit of the OOK symbol is 1.

2. OFDM modulation: The OFDM modulation is a modulation manner widely used in 4G and 5G. A basic principle of the OFDM modulation is that a channel is divided into several orthogonal subcarriers, high-speed data signals are converted into parallel low-speed data sub-streams, and the data sub-streams are modulated to each subcarrier for transmission. The OFDM modulation actually is that spectrum resources of the system are divided into two-dimensional time-frequency grids. In a time domain dimension, the spectrum resources are divided at a granularity of an OFDM symbol (OFDM symbol). In a frequency dimension, the spectrum resources are divided at a granularity of a subcarrier. In each OFDM symbol, one modulation signal may be transmitted on each subcarrier. In a 4G/5G system, one OFDM symbol in time domain and one subcarrier in frequency domain are referred to as one resource element.

3. OOK modulation technology based on an OFDM transmitter: The OOK modulation technology based on the OFDM transmitter is that OOK signals are generated based on the OFDM transmitter. For example, when the OOK symbol is an ON symbol, one OFDM modulation signal is sent; or when the OOK symbol is an OFF symbol, no signal is sent. It should be noted that the modulation technology used in embodiments of this application is the OOK modulation technology based on the OFDM transmitter. In other words, OOK modulation mentioned below is the OOK modulation technology based on the OFDM transmitter unless otherwise specified.

4. Channel bandwidth and transmission bandwidth: In a cellular system, a channel bandwidth (which may also be referred to as a system bandwidth) of the access network device is a maximum bandwidth allocated to the access network device, and a unit may be Hertz (Hz). In the channel bandwidth, a frequency that can be used for signal receiving and sending is a transmission bandwidth. In the cellular system, a unit of the transmission bandwidth may be a physical resource block (physical resource block, PRB). Generally, a maximum bandwidth (namely, a maximum configurable carrier transmission bandwidth) used by the access network device for signal transmission needs to be less than the channel bandwidth, and therefore interference to an adjacent channel can be effectively avoided.

Further, the transmission bandwidth actually used by the access network device for signal transmission may be less than or equal to the maximum configurable carrier transmission bandwidth. This helps reduce power consumption of the access network device.

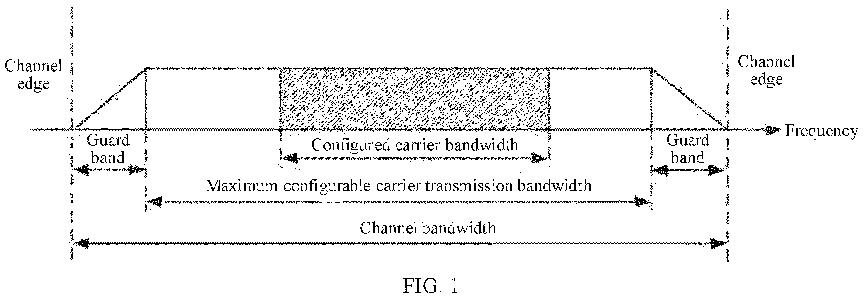

To more clearly understand a relationship between the foregoing several bandwidths, FIG. 1 shows an example of the relationship between the several bandwidths. As shown in FIG. 1, guard bands are disposed on two sides of the maximum configurable carrier transmission bandwidth. In other words, the channel bandwidth includes the guard bands and the maximum configurable carrier transmission bandwidth, that is, the channel bandwidth is greater than the maximum configurable carrier transmission bandwidth. A transmission bandwidth (namely, a configured carrier bandwidth in the figure, which may also be referred to as a configured carrier transmission bandwidth) actually used by the access network device for signal transmission may be less than or equal to the maximum configurable carrier transmission bandwidth.

5. Primary wireless apparatus and secondary wireless apparatus: It should be noted that in embodiments of this application, one terminal device may include two wireless apparatuses: a primary wireless apparatus and a secondary wireless apparatus. The primary wireless apparatus (primary connection radio, PCR) is a wireless apparatus that works normally, and the secondary wireless apparatus (companion connection radio, CCR) is a wireless apparatus that works in an extremely low power state. The secondary wireless apparatus may also be referred to as a companion wireless apparatus. Generally, the primary wireless apparatus is off, and the secondary wireless apparatus detects a paging signal or a wake-up signal from another device. When detecting a paging signal or a wake-up signal of the primary wireless apparatus that needs to be woken up, the secondary wireless apparatus wakes up the primary wireless apparatus to communicate with the another device.

It should be noted that the waking up the second device or not waking up the second device mentioned below may be understood as waking up the primary wireless apparatus in the second device or not waking up the primary wireless apparatus in the second device.

In the cellular system, the primary wireless apparatus is a modem (modem) used for communication, and the secondary wireless apparatus is a low power receiver (lower power receiver), or is referred to as a low power wake-up receiver (low power wake-up receiver, LP-WUR). Because camping power consumption of the LP-WUR is quite low, effect of power consumption of the terminal device can be reduced.

It should be understood that the access network device may communicate with the terminal device, and there are two types of communication air interface links between the access network device and the terminal device: a primary communication air interface link (a "primary communication link" for short below) and an LP-WU air interface link (an "LP-WU link" for short below) respectively. The primary communication link is used for normal voice and data communication, and the LP-WU link is used for transmitting a low power wake-up signal sent by the access network device to the terminal device.

Before the device wake-up method provided in embodiments of this application is described, the following descriptions are provided:

1. To clearly describe the technical solutions in embodiments of this application, words such as "first" and "second" are used in embodiments of this application to distinguish between same items or similar items that provide basically same functions or purposes. For example, a first time domain resource and a second time domain resource are merely intended to distinguish between different time domain resources, and are not intended to limit a sequential order thereof. A person skilled in the art may understand that the words such as "first" and "second" do not limit a quantity or an execution sequence, and the words such as "first" and "second" do not indicate a definite difference.

2. "At least one of the following items (pieces)" or a similar expression thereof indicates any combination of these items, including a single item (piece) or any combination of a plurality of items (pieces). For example, at least one item (piece) of a, b, and c may indicate the following: a, b, c, a and b, a and c, b and c, or a, b and c, where a, b, and c may be singular or plural.

The following describes in detail the device wake-up method provided in embodiments of this application with reference to the accompanying drawings.

For ease of understanding, the following first describes a system architecture to which the method provided in embodiments of this application is applicable. It may be understood that the system architecture described in embodiments of this application is intended to describe the technical solutions in embodiments of this application more clearly, and does not constitute any limitation on the technical solutions provided in embodiments of this application.

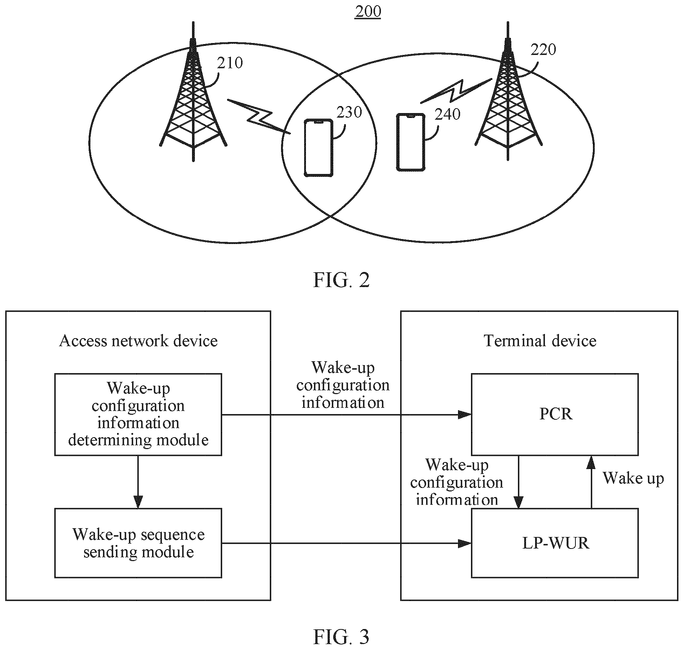

FIG. 2 is a diagram of a system architecture to which a method according to an embodiment of this application is applicable. As shown in FIG. 2, the communication system 200 includes terminal devices and access network devices, for example, an access network device 210, an access network device 220, a terminal device 230, and a terminal device 240 shown in the figure. The terminal device 230 and the terminal device 240 may be mobile or fixed. The access network device 210 and the access network device 220 may be micro base stations, or may be TRPs or other types of network devices. This is not limited in this embodiment of this application. Each access network device may provide communication coverage for a particular geographical area, and may communicate, through a wireless link, with a terminal device located in the coverage (a cell). For example, the access network device 210 may communicate with the terminal device 230, and the access network device 220 may communicate with the terminal device 240.

Optionally, the communication system 200 may include more or fewer access network devices, and coverage of each access network device may include another quantity of terminal devices. This is not limited in this embodiment of this application.

Optionally, the communication system 200 may further include a core network device, and the core network device may communicate with the terminal device through the access network device. For example, the access network device 210 and the access network device 220 are connected to the core network device. The core network device may communicate with the terminal device 230 through the access network device 210, and the core network device may also communicate with the terminal device 240 through the access network device 220.

The terminal device 230 and the terminal device 240 shown in FIG. 2 may include primary wireless apparatuses and secondary wireless apparatuses. Generally, the primary wireless apparatus is off, and the secondary wireless apparatus detects a wake-up signal from another device. When the wake-up signal indicates that the primary wireless apparatus needs to be woken up, the primary wireless apparatus is woken up to communicate with the another device, so that effect of power consumption of the terminal device can be reduced.

FIG. 3 is a diagram of an architecture of an access network device and a terminal device according to an embodiment of this application. The following describes in detail a process of waking up the terminal device with reference to FIG. 3.

As shown in FIG. 3, the access network device includes a wake-up configuration information determining module and a wake-up sequence sending module. The wake-up configuration information determining module is configured to: determine wake-up configuration information, and send the wake-up configuration information to a PCR of the terminal device. The wake-up sequence sending module is configured to send a wake-up sequence to an LP-WUR of the terminal device based on the wake-up configuration information, where the wake-up sequence corresponds to wake-up information, and the wake-up information indicates to wake up the PCR of the terminal device or not to wake up the PCR of the terminal device. The terminal device includes the PCR and the LP-WUR. The PCR is configured to: receive the wake-up configuration information, and send the wake-up configuration information to the LP-WUR, so that the LP-WUR receives the wake-up sequence from the access network device based on the wake-up configuration information. The LP-WUR is configured to: receive the wake-up sequence from the access network device based on the wake-up configuration information, and wake up the PCR when the wake-up sequence indicates to wake-up the PCR.

Currently, in a 3GPP standard, it is proposed to use the foregoing LP-WU technology in a cellular system, that is, the access network device indicates, by using a wake-up signal, whether the terminal device needs to be woken up, to reduce power consumption of a wireless device connected to a cellular network. However, in the cellular system, if a design similar to that of a wake-up signal in 802.11ba is used, great impact on spectrum efficiency of a primary communication link is caused, that is, it is difficult to ensure compatibility between a link used for transmitting a wake-up signal and the primary communication link. For example, spectrum efficiency is low. Consequently, costs of introducing the wake-up signal are high. Specifically, in 802.11ba, the wake-up signal is transmitted in a time division multiplexing manner by using a 4-MHz bandwidth and an 8-MHz guard band. Consequently, spectrum efficiency is low. In the cellular system, a licensed spectrum is generally used, and spectrum costs are high. If spectrum efficiency in 802. 11ba is still maintained, costs are greatly increased. Therefore, a spectrum sharing solution suitable for the cellular system needs to be considered, that is, impact of introducing the wake-up signal on spectrum efficiency of the primary communication link needs to be reduced.

To resolve the foregoing problem, this application provides a device wake-up method. A first device determines, based on determined wake-up information, a wake-up sequence corresponding to the wake-up information, modulates the wake-up sequence into one or more LP-WU symbols, and sends the one or more LP-WU symbols. A frequency domain resource used for transmitting the LP-WU symbol is adjacent to an edge of a transmission bandwidth of the first device, that is, the LP-WU symbol is transmitted by using an edge part of the transmission bandwidth of the first device, to reduce impact of transmitting the LP-WU symbol on a primary communication link. This helps improve spectrum efficiency, and reduce costs of introducing a wake-up signal in a cellular system.

The following describes in detail the device wake-up method provided in embodiments of this application with reference to the accompanying drawings. It should be understood that the following embodiments describe the method from a perspective of interaction between a first device and a second device. The first device may be, for example, the access network device 210 or the access network device 220 shown in FIG. 2, and the second device may be, for example, the terminal device 230 or the terminal device 240 shown in FIG. 2.

It should be understood that the first device may alternatively be, for example, a core network device, and the first device communicates with the terminal device through the access network device.

It should be further understood that, although the embodiments shown below are described through interaction between the first device and the second device as an example, this should not constitute any limitation on an execution subject of the method. The method provided in embodiments of this application can be performed provided that a program that records code of the method provided in embodiments of this application can be run. For example, the first device may alternatively be replaced with a component (for example, a chip or a chip system) configured in the first device, or another functional module that can invoke a program and execute the program. The second device may alternatively be replaced with a component (for example, a chip or a chip system) configured in the second device, or another functional module that can invoke a program and execute the program. This is not limited in embodiments of this application.

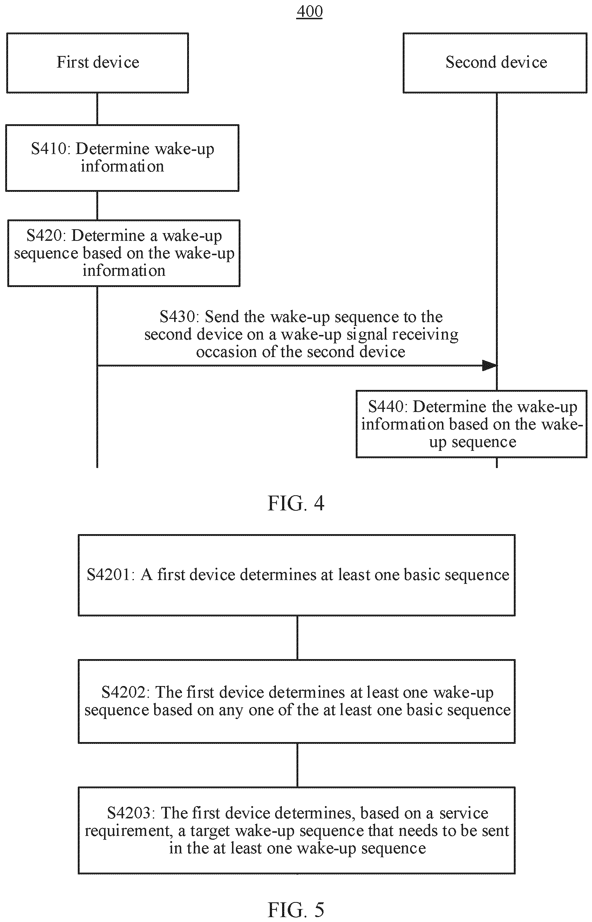

FIG. 4 is a schematic flowchart of a device wake-up method 400 according to an embodiment of this application. The method 400 shown in FIG. 4 may include S410 to S440. The following describes in detail the steps in the method 400.

S410: A first device determines wake-up information.

The wake-up information is used for waking up a second device, or is used for not waking up a second device.

For example, the first device determines the wake-up information based on a service requirement of the first device, that is, the first device determines whether to wake up the second device. The following lists in detail several scenarios in which the first device may need to wake up the second device, but this should not constitute any limitation on this embodiment of this application.

For example, when the first device has data that needs to be received by the second device, the first device needs to wake up the second device, and then the first device determines the wake-up information, where the wake-up information is used for waking up the second device. When the first device does not have data that needs to be received by the second device, the first device does not need to wake up the second device, and then the first device determines the wake-up information, where the wake-up information is used for not waking up the second device. That is, a primary wireless apparatus of the second device is still in an off state, and the second device maintains a low power state provided that only a secondary wireless apparatus works.

For another example, when the first device needs the second device to measure a signal of a primary communication link and report a measurement result, the first device needs to wake up the second device, and then the first device determines the wake-up information, where the wake-up information is used for waking up the second device. When the first device does not need the second device to measure a signal of a primary communication link and report a measurement result, the first device does not need to wake up the second device, and then the first device determines the wake-up information, where the wake-up information is used for not waking up the second device.

For still another example, when the first device needs the second device to receive a new system message or update a system message, the first device needs to wake up the second device, and then the first device determines the wake-up information, where the wake-up information is used for waking up the second device. When the first device does not need the second device to receive a new system message or update a system message, the first device does not need to wake up the second device, and then the first device determines the wake-up information, where the wake-up information is used for not waking up the second device.

S420: The first device determines a wake-up sequence based on the wake-up information.

The wake-up sequence is a binary bit sequence. After determining the wake-up information based on the service requirement of the first device, the first device further determines the wake-up sequence that needs to be sent.

In a possible implementation, the first device determines a correspondence between at least one wake-up sequence and at least one piece of wake-up information, and determines the wake-up sequence based on the wake-up information and the correspondence between the at least one wake-up sequence and the at least one piece of wake-up information. In other words, each wake-up sequence corresponds to one type of wake-up information, and the first device may determine, based on the wake-up information, the wake-up sequence corresponding to the wake-up information.

It may be learned from the foregoing that the first device needs to determine in advance the at least one wake-up sequence and wake-up information corresponding to each of the at least one wake-up sequence.

Therefore, the method further includes: The first device determines the at least one wake-up sequence. Each of the at least one wake-up sequence corresponds to one type of wake-up information.

For example, the at least one wake-up sequence may be determined based on a same basic sequence, so that complexity of designing the wake-up sequence can be reduced, and complexity of receiving a wake-up signal by the second device can also be reduced.

With reference to FIG. 5, the following describes in detail a process in which the first device determines the wake-up sequence that needs to be sent. The method shown in FIG. 5 includes S4201 to S4203. It should be understood that the method shown in FIG. 5 may be considered as a specific implementation of S420 shown in FIG. 4.

S4201: The first device determines at least one basic sequence.

The first device may determine, based on a predefined condition, at least one basic sequence that meets the condition, or may generate at least one basic sequence based on a pseudo-random sequence. The following separately describes the foregoing two possible designs in detail.

In the first possible design, the first device determines, based on the predefined condition, the at least one basic sequence that meets the condition. The predefined condition includes one or more of the following, that is, the at least one basic sequence meets at least one or more of the following: a quotient of an autocorrelation peak of the basic sequence and a cross-correlation peak of another sequence with a same length is less than or equal to a first preset threshold; a quantity of 0s and a quantity of 1s in the basic sequence are equal; or a quantity of consecutive 0s or consecutive 1s in the basic sequence is less than or equal to a second preset threshold.

The quotient of the autocorrelation peak of the basic sequence and the cross-correlation peak of the another sequence with a same length is less than or equal to the first preset threshold, so that wake-up signal detection performance by the second device can be improved. A value of the first preset threshold is related to a length of the basic sequence. A longer basic sequence indicates a larger first preset threshold. It should be understood that a longer length of the basic sequence indicates a larger autocorrelation peak and a larger cross-correlation peak of the basic sequence, and therefore the value of the first preset threshold is larger. For example, when the length of the basic sequence is 12 bits, the value of the first preset threshold is 3. When the length of the basic sequence is 14 bits, the value of the first preset threshold is 3.5. When the length of the basic sequence is 24 bits, the value of the first preset threshold is 6. When the length of the basic sequence is 28 bits, the value of the first preset threshold is 7. When the length of the basic sequence is 36 bits, the value of the first preset threshold is 9.

The quantity of 0s and the quantity of 1s in the basic sequence are equal, to ensure power balance in wake-up signal transmission time. It may be understood that, if there is a large quantity of 0s in the basic sequence, there are a plurality of times that a transmit power is 0; or if there is a large quantity of 1s in the basic sequence, there are a plurality of times that a transmit power is not 0. Consequently, power unbalance in the wake-up signal transmission time is caused. Therefore, the quantity of 0s and the quantity of 1s in the basic sequence are equal. This helps ensure power balance in the wake-up signal transmission time.

The quantity of consecutive 0s or consecutive 1s in the basic sequence is less than or equal to the second preset threshold. This helps ensure power balance in the wake-up signal transmission time. In addition, if there is a large quantity of consecutive 0s in the basic sequence, the second device cannot receive a signal from the first device for long time, and consequently timing synchronization with the first device cannot be ensured. Therefore, the quantity of consecutive 0s or consecutive 1s in the basic sequence is less than or equal to the second preset threshold, which also helps resolve a problem of timing synchronization between the second device and the first device.

Optionally, a value of the second preset threshold is related to the length of the basic sequence. For example, when the length of the basic sequence is 12 bits, the value of the second preset threshold is 4. When the length of the basic sequence is 14 bits, the value of the second preset threshold is 4. When the length of the basic sequence is 24 bits, the value of the second preset threshold is 3. When the length of the basic sequence is 28 bits, the value of the second preset threshold is 3. When the length of the basic sequence is 36 bits, the value of the second preset threshold is 5.

It should be understood that the foregoing condition is merely an example, and the at least one basic sequence determined by the first device may meet one or more of the items in the foregoing condition.

The following provides possible examples of basic sequences, with different lengths, that are determined based on the foregoing condition.

For example, when the length of the basic sequence is 12 bits, the basic sequence that meets the foregoing condition may be S1=[001 001 110 101], S2=[001 111 001 010], S3=[010 001 111 001], S4=[010 100 111 100], S5=[010 110 001 101], S6=[010 110 100 011], or S7=[010 111 001 001]. When the length of the basic sequence is 14 bits, the basic sequence that meets the foregoing condition may be S8=[010 101 111 001 00]. When the length of the basic sequence is 24 bits, the basic sequence that meets the foregoing condition may be S9=[010 101 100 100 101 111 000 110], S10=[lll 011 000 100 100 111 000 101], or S11=[110 010 101 111 000 010 010 011]. When the length of the basic sequence is 28 bits, the basic sequence that meets the foregoing condition may be S12=[010 001 101 111 011 000 011 100 010 1]. When the length of the basic sequence is 36 bits, the basic sequence that meets the foregoing condition may be S13=[101 101 010 010 011 010 011 001 110 000 011 101] or S14=[110 110 000 100 011 101 010 010 111 001 011 100].

In the second possible design, the first device generates the at least one basic sequence based on the pseudo-random sequence. The pseudo-random sequence may be an m-sequence, an M-sequence, or a gold sequence. For example, the first device generates the at least one basic sequence based on a gold sequence whose length is 31.

The gold sequence $c(n) = (x_1(n + N_c) + x_2(n + N_c))\mathrm{mod}2$, where $x_1(n + 31) = (x_1(n + 3) + x_1(n))\mathrm{mod}2$, $x_2(n + 31) = (x_2(n + 3) + x_2(n + 2) + x_2(n + 1) + x_2(n))\mathrm{mod}2$, and $N_c = 1600$. An initial value of the first m-sequence $x_1(n)$ is $x_1(0) = 1$, $x_1(n) = 0$, and $n = 1, 2,...,30$. An initial value $c_{\mathrm{init}} = \sum_{i=0}^{30} x_2(i) \cdot 2^i$ of the second m-sequence $x_2(n)$ may be determined based on one or more of the following:

a cell identity (cell identity, CellID) of the first device, denoted as $n_{l\_CellID}$; a radio access network identity (radio access network area identity, RAN area ID) of the first device, denoted as $n_{l\_R4NID}$; a tracking area identity (tracking area identity, TAID) of the first device, denoted as $n_{l\_TAID}$; an LP-WU user equipment identity (which is an LP-WU identity for short) of the second device, denoted as $n_{l\_UEID}$; or a state of the second device. The initial value of the second m-sequence is determined based on one or more of the foregoing items, so that a wake-up information sending error caused because different devices use a same wake-up sequence in one radio access network RAN area or one tracking area can be avoided to a maximum extent.

For example, the initial value of the second m-sequence $x_2(n)$ is determined based on the LP-WU user equipment identity of the second device: $c_{init} = (n_{I\_UEID})\mathrm{mod}2^{31}$. For another example, the initial value of the second m-sequence $x_2(n)$ is determined based on the LP-WUR user equipment identity of the second device and the cell identity of the first device: $c_{init} = (n_{I\_UEID} \cdot 2^{16} + n_{I\_CellID})\mathrm{mod}2^{31}$, or $c_{init} = (n_{I\_UEID} \cdot 2^{10} + n_{I\_CellID})\mathrm{mod}2^{31}$. For another example, the initial value of the second m-sequence $x_2(n)$ is determined based on the LP-WU user equipment identity of the second device, the cell identity of the first device, and the radio access network identity of the first device: $c_{init} = (n_{I\_UEID} \cdot 2^{18} + n_{I\_CellID} \cdot 2^9 + n_{I\_RANID})\mathrm{mod}2^{31}$.

A value of the LP-WU user equipment identity of the second device may be a user identity $n_{p\_UEID}$ of the primary communication link of the second device, or may be obtained through calculation based on a user identity of the primary communication link of the second device, or may be automatically configured by the first device.

For example, that the value of the LP-WU user equipment identity of the second device is obtained through calculation based on the user identity of the primary communication link of the second device includes: A relationship between the value of the LP-WU user equipment identity of the second device and the user identity of the primary communication link of the second device is as follows: $n_{p\_UEID} = n_{I\_UEID}\,\mathrm{mod}2^k$, where $k$ is a quantity of bits of the LP-WU user equipment identity. In this manner, an algorithm for allocating the LP-WU user identity may be simplified.

Optionally, the user identity $n_{p\_UEID}$ of the primary communication link of the second device may be as follows: a 48-bit NG-5G-S-temporary mobile subscriber identity (temporary mobile subscriber identity, TMSI), and a radio network temporary identity (long-radio network temporary identity, RNTI), for example, a 40-bit "I-RNTI-value" or a 24-bit "shortI-RNTI-value", or a 16-bit cell (cell, C)-RNTI.

A specific user identity, of the primary communication link, on which the first device is based to obtain the LP-WU user equipment identity of the second device is related to a state of the second device before the second device enters an LP-WU mode.

For example, if a PCR of the second device is in an idle (IDLE) state before the second device enters the LP-WU mode, the LP-WU user identity is obtained based on the 48-bit NG-5G-S-TMSI; if a PCR of the second device is in an inactive (INACTIVE) state before the second device enters the LP-WU mode, the LP-WU user identity is obtained based on the "I-RNTI-value" or the "shortI-RNTI-value"; or if a PCR of the second device is in a connected (CONNECTED) state before the second device enters the LP-WU mode, the LP-WU user identity is obtained based on the 16-bit C-RNTI.

S4202: The first device determines the at least one wake-up sequence based on any basic sequence of the at least one basic sequence.

The at least one wake-up sequence corresponding to the at least one type of wake-up information, and the wake-up information is used for waking up the second device, or the wake-up information is used for not waking up the second device.

After determining the at least one basic sequence based on the foregoing method, the first device determines the at least one wake-up sequence based on the any basic sequence. It should be understood that, in companion with that the first device determines the at least one wake-up sequence based on different basic sequences, that the first device determines the at least one wake-up sequence based on a same basic sequence can reduce complexity of designing the wake-up sequence, and can also reduce complexity of receiving the wake-up signal by the second device.

In a possible implementation, the first device determines the at least one wake-up sequence based on a specific basic sequence (for example, a basic sequence B) and an orthogonal code. The orthogonal code is a Walsh code. If the orthogonal code is 1, it indicates that each bit in the basic sequence B remains unchanged; or if the orthogonal code is -1, it indicates that "NOT" is performed on each bit in the basic sequence B. For example, if the orthogonal code is 1, the wake-up sequence is B; or if the orthogonal code is -1, the wake-up sequence is $\overline{B}$, where $\overline{B}$ indicates that "NOT" is performed on each bit in the basic sequence B. For another example, if the orthogonal code is [1, 1], the wake-up sequence is [B, B], and the length of the wake-up sequence is twice a length of the basic sequence B; or if the orthogonal code is [1, -1], the wake-up sequence is [B, $\overline{B}$], and the length of the wake-up sequence is twice a length of the basic sequence B. In other words, the length of the wake-up sequence is related to the length of the orthogonal code. Specifically, the length of the wake-up sequence is equal to a product of the length of the basic sequence and the length of the orthogonal code.

Optionally, the length of the orthogonal code is a fixed value, or the length of the orthogonal code is a value that can be configured by the first device.

In a possible design, the length of the orthogonal code is a fixed value. For example, the first device and the second device agree on the length of the orthogonal code in advance.

In the second possible design, the first device may configure the length of the orthogonal code based on a determined wake-up signal coverage deployment requirement. For example, when a base station, for example, a small cell, with small coverage is deployed, the length of the orthogonal code may be configured to be small; or when a base station, for example, a macro cell, with large coverage is deployed, the length of the orthogonal code may be configured to be large.

In the third possible design, when the first device needs to wake up a small quantity of devices, the length of the orthogonal code may be configured to be small; or when the first device needs to wake up a large quantity of devices, the length of the orthogonal code may be configured to be large, so that more wake-up sequences can be determined based on a same basic sequence. For example, if the length of the orthogonal code is 2, four wake-up sequences may be determined based on a same basic sequence, and the four wake-up sequences may separately correspond to wake-up and non-wake-up of two devices.

It may be understood that after determining the at least one wake-up sequence, the first device further needs to determine the correspondence between the at least one wake-up sequence and the at least one type of wake-up information.

For the second device, the following several possible cases are included:

In a possible case, the first device determines one wake-up sequence, where the wake-up sequence indicates to wake up the second device. In other words, if the first device sends the wake-up sequence to the second device, and the second device receives the wake-up sequence, it indicates that the second device is woken up; or if the first device does not send the wake-up sequence to the second device, and the second device does not receive the wake-up sequence, it indicates that the second device is not woken up.

In the second possible design, the first device determines one wake-up sequence, where the wake-up sequence indicates to not wake up the second device. In other words, if the first device sends the wake-up sequence to the second device, and the second device receives the wake-up sequence, it indicates that the second device is not woken up; or if the first device does not send the wake-up sequence to the second device, and the second device does not receive the wake-up sequence, it indicates that the second device is woken up.

In conclusion, in the two possible designs, the first device needs to determine only one wake-up sequence for the second device. In this way, detection complexity of receiving the wake-up information by the second device can be reduced. In addition, a wake-up capacity may be further improved. For example, a plurality of devices may share one wake-up signal receiving occasion. The first device sends, on the wake-up signal receiving occasion, only a wake-up sequence of a device that needs to be woken up, and other devices that share a same wake-up signal receiving occasion all are not woken up.

In the third possible design, the first device determines two wake-up sequences for the second device, where one wake-up sequence indicates to wake up the second device, and the other wake-up sequence indicates to not wake up the second device. For example, the first device determines a wake-up sequence X and a wake-up sequence Y, where the wake-up sequence X indicates to wake up the second device, and the wake-up sequence Y indicates to not wake up the second device. If the first device sends the wake-up sequence X to the second device, it indicates that the first device expects to wake up the second device; or if the first device sends the wake-up sequence Y to the second device, it indicates that the first device does not expect to wake up the second device.

In this manner, wake-up information detection performance can be improved, and a wake-up information detection false alarm probability and a wake-up information detection miss alarm probability can be reduced. In addition, if only one wake-up sequence is used, for example, only the wake-up sequence X used for waking up the second device is determined, when the second device is not woken up for long time, the second device is vulnerable to losing synchronization information. However, when two wake-up sequences are used, regardless of whether the second device needs to be woken up, the second device may receive at least one wake-up sequence, to perform synchronization and timing by using the wake-up sequence.

It should be understood that the second device needs to know the correspondence between the wake-up information and the wake-up sequence, to determine, based on the received wake-up sequence, whether to wake up the second device.

Optionally, the second device may obtain the correspondence between the wake-up information and the wake-up sequence in any one of the following manners:

In the first possible design, the first device and the second device agree on the correspondence between wake-up information and the wake-up sequence in advance. For example, in an LP-WU protocol, the correspondence between the wake-up information and the wake-up sequence is specified.

In the second possible design, the correspondence between the wake-up information and the wake-up sequence is determined according to a predefined rule. For example, the second device determines the correspondence between the wake-up information and the wake-up sequence based on an LP-WU ID. For example, if a lowest bit of the LP-WU ID is 0, the wake-up sequence X=[B] indicates to wake up the second device, and the wake-up sequence Y=[$\overline{B}$] indicates to not wake up the second device; or if a lowest bit of the LP-WU ID is 1, the wake-up sequence X=[B] indicates to not wake up the second device, and the wake-up sequence Y=[$\overline{B}$] indicates to wake up the second device.

In the third possible design, the first device determines the correspondence between the wake-up information and the wake-up sequence, and notifies the second device through the primary communication link between the first device and the second device.

S4203: The first device determines the wake-up sequence (namely, the wake-up sequence that needs to be sent, which may also be referred to as a target wake-up sequence) based on the wake-up information and the correspondence between the at least one wake-up sequence and the at least one type of wake-up information.

When determining one wake-up sequence, the first device determines, based on the service requirement, whether to send the wake-up sequence. When the second device is to be woken up, the first device determines, based on the service requirement, the target wake-up sequence that needs to be sent when determining two wake-up sequences. The following describes in detail a process in which the first device determines the target wake-up sequence based on the service requirement by using an example in which the first device determines the two wake-up sequences.

For example, the first device determines the two wake-up sequences. One wake-up sequence X indicates to wake up the second device, and the other wake-up sequence Y indicates to not wake up the second device. In this case, when determining that the second device needs to be woken up, the first device further determines that the wake-up sequence that needs to be sent is X; or when determining that the second device does not need to be woken up, the first device further determines that the wake-up sequence that needs to be sent is Y For a method for determining, by the first device, whether the second device needs to be woken up, refer to related descriptions in S410.

S430: The first device sends the wake-up sequence (namely, the target wake-up sequence) to the second device on a wake-up signal receiving occasion of the second device. Correspondingly, the second device receives the wake-up sequence from the first device on the wake-up signal receiving occasion.

Each bit of the wake-up sequence is modulated into one or more LP-WU symbols through OOK, the wake-up signal receiving occasion includes a wake-up signal receiving occasion frequency domain resource, and the wake-up signal receiving occasion frequency domain resource is adjacent to an edge of a transmission bandwidth of the first device in frequency domain.

After the wake-up sequence is modulated into the one or more LP-WU symbols, the wake-up sequence may be referred to as a wake-up signal.

The following describes in detail several possible designs of the wake-up signal.

Optionally, duration of one of the one or more LP-WU symbols is T1, and duration of a symbol that is of the primary communication link of the first device and that overlaps the LP-WU symbol in time domain is N*T1, where N is an integer greater than or equal to 1.

In other words, the duration of the symbol that is of the primary communication link of the first device and that overlaps the LP-WU symbol in time domain is an integer multiple of the corresponding LP-WU symbol.

In this way, because OFDM modulation is used for signals on both the LP-WU link and the primary communication link, such a design can effectively reduce inter-symbol interference and inter-subcarrier interference between the primary communication link and the LP-WU link when the primary communication link and the LP-WU link frequency-division-multiplexed. In addition, designs of the first device and the second device may be simplified, so that the first device and the second device use a same timing relationship as much as possible.

Optionally, duration of the wake-up signal is in an integer multiple relationship with a length of a slot.

For example, duration of a slot of the primary communication link is $2^{-\mu 1}$ microseconds, where a value of $\mu 1$ may be 0, 1, 2, 3, or 4, and duration of a slot of the LP-WU link is $2^{-\mu}$. Herein, $\mu 1$ and $\mu$ may be equal, or $\mu$ is greater than $\mu 1$ (that is, a length of the slot of the primary communication link is an integer multiple of duration of a slot of a wake-up link), or $\mu$ is less than $\mu 1$ (that is, duration of a slot of a wake-up link is an integer multiple of a length of the slot of the primary communication link). In this way, the slot of the primary communication link is in an integer multiple relationship with the slot of the wake-up link, so that a waste of resources can be effectively reduced.

Optionally, the wake-up signal receiving occasion further includes a wake-up signal receiving occasion time domain resource. That is, the wake-up signal receiving occasion includes the wake-up signal receiving occasion time domain resource and the wake-up signal receiving occasion frequency domain resource. In other words, the wake-up signal receiving occasion may be physically understood as a time-frequency resource.

The following describes in detail the foregoing wake-up signal receiving occasion. It may be learned from the foregoing that the foregoing wake-up signal receiving occasion may be physically understood as a time-frequency resource. In the following descriptions, the wake-up signal receiving occasion is divided into a wake-up signal receiving occasion time domain resource and a wake-up signal receiving occasion frequency domain resource, which are separately described. The wake-up signal receiving occasion frequency domain resource may also be referred to as an LP-WU transmission channel. The following describes in detail a possible design of the LP-WU transmission channel with reference to the accompanying drawings.

The LP-WU transmission channel may be at the edge of the transmission bandwidth of the first device. This helps reduce impact of introducing the LP-WU link on spectrum efficiency of the primary communication link.

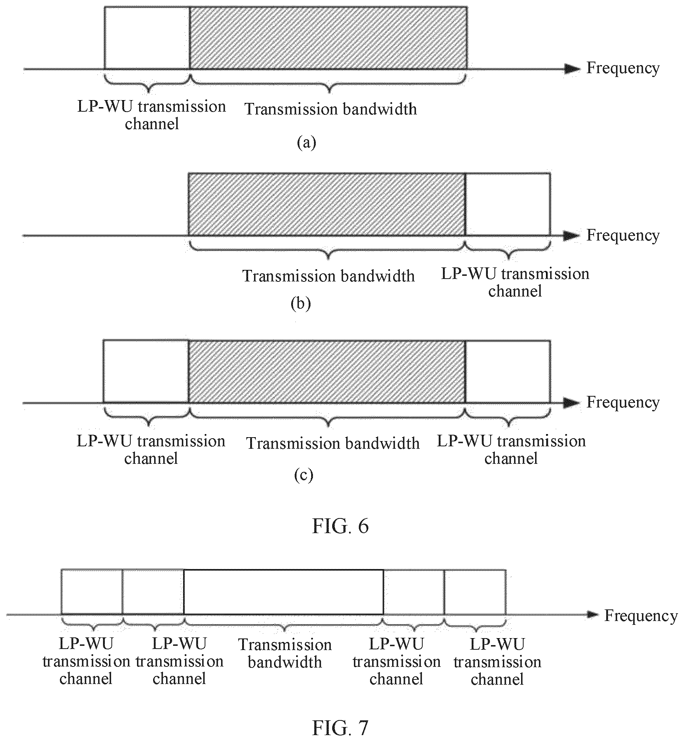

For example, an LP-WU transmission channel may be at a low frequency part at an edge of a configured carrier transmission bandwidth (which is a transmission bandwidth for short below) of the first device, or an LP-WU transmission channel may be at a high frequency part at an edge of a transmission bandwidth of the first device, or LP-WU transmission channels may be at a low frequency part and a high frequency part at edges of a transmission bandwidth of the first device. With reference to FIG. 6, the following describes in detail that the LP-WU transmission channel may be at the edge of the transmission bandwidth of the first device. As shown in (a) in FIG. 6, an LP-WU transmission channel is configured at a low frequency part at an edge of a transmission bandwidth of the first device. As shown in (b) in FIG. 6, an LP-WU transmission channel is configured at a high frequency part at an edge of a transmission bandwidth of the first device. As shown in (c) in FIG. 6, LP-WU transmission channels are configured at a low frequency part and a high frequency part at edges of a transmission bandwidth of the first device. In other words, the first device may determine two LP-WU transmission channels for the second device, and the two LP-WU transmission channels are respectively located on two sides of the transmission bandwidth (namely, the low frequency part and the high frequency part at the edges of the transmission bandwidth) of the first device.

It should be noted that, for a plurality of devices that need to be woken up, the first device may determine a plurality of LP-WU transmission channels, and the plurality of LP-WU transmission channels all are located on the two sides of the transmission bandwidth (namely, the low frequency part and the high frequency part at the edges of the transmission bandwidth) of the first device. As shown in FIG. 7, devices that need to be woken up are a device 1 and a device 2. In this case, the first device may determine four LP-WU transmission channels, and the four LP-WU transmission channels all are located on two sides of a transmission bandwidth of the first device.

Optionally, that the LP-WU transmission channel is located at the edge of the transmission bandwidth of the first device includes: The LP-WU transmission channel is located in the transmission bandwidth of the first device, or is located outside the transmission bandwidth of the first device.

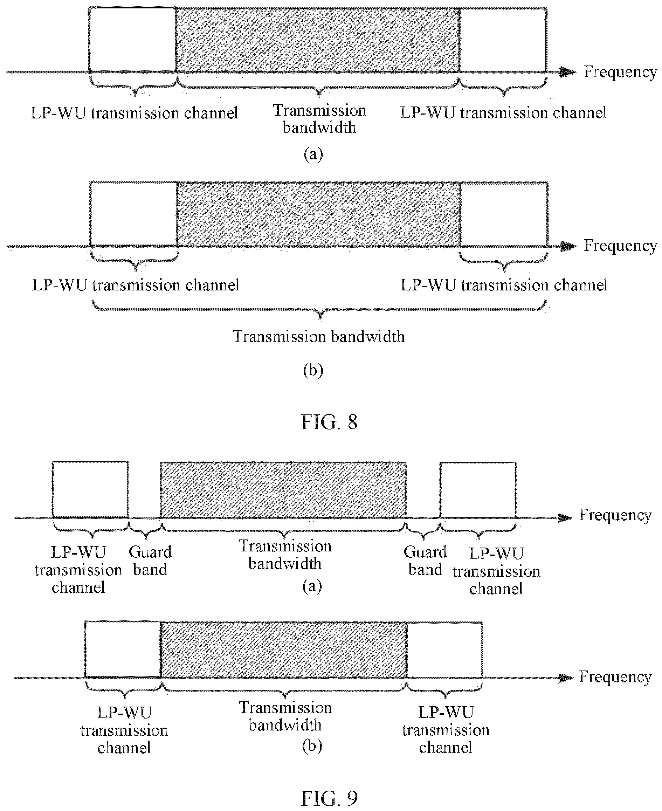

As shown in (a) in FIG. 8, LP-WU transmission channels may be located on two sides of a transmission bandwidth of the first device, and the LP-WU transmission channels are located outside the transmission bandwidth of the first device. In this way, the transmission bandwidth of the first device does not change due to whether there is an LP-WU transmission channel, impact on a service of another non-LP-WU device in a PCR can be reduced, and compatibility can be better ensured. As shown in (b) in FIG. 8, LP-WU transmission channels may alternatively be located on two sides of a transmission bandwidth of the first device, and the LP-WU transmission channels are located in the transmission bandwidth of the first device. In this way, interference to an adjacent channel outside the transmission bandwidth of the first device can be reduced.

It may be understood that, when the LP-WU transmission channel is located outside the transmission bandwidth of the first device, the LP-WU transmission channel is located in a system bandwidth of the first device.

Optionally, there may be no guard band between the LP-WU transmission channel and the transmission bandwidth of the first device, or there may be a guard band between the LP-WU transmission channel and the transmission bandwidth of the first device.

As shown in (a) in FIG. 9, there is a guard band between an LP-WU transmission channel and a transmission bandwidth of the first device, so that interference of a PCR to an LP-WUR can be reduced. As shown in (b) in FIG. 9, there is no guard band between an LP-WU transmission channel and a transmission bandwidth of the first device. This helps save a frequency.

Optionally, a transmission bandwidth of the foregoing LP-WU transmission channel may be 180 kHz. On one hand, the bandwidth is the same as a transmission bandwidth of NB-IoT in a cellular system, and a bandwidth used in the cellular system since 2G may be used by a mature component. This reduces costs of a terminal device. On the other hand, some components and spectrums of the NB-IoT may be shared with an NB-IoT system. This reduces deployment costs of a network device. In addition, in comparison with a bandwidth (for example, 4 MHz) used by the wake-up signal in 802.11ba, this bandwidth is smaller, and this can slow down spectrum efficiency reduction caused by introduction of the wake-up signal in a network. It should be noted that 180 kHz herein may correspond to different subcarrier spacings, and quantities of included subcarriers are different. For example, if a subcarrier spacing is 60 kHz, it is equivalent to three subcarriers; or if a subcarrier spacing is 30 kHz, it is equivalent to six subcarriers.

The following describes in detail a possible design of the wake-up signal receiving occasion time domain resource with reference to the accompanying drawings.

A length of the LP-WU symbol is in an integer multiple relationship with a length of an OFDM symbol of the PCR (namely, an OFDM symbol of the primary communication link). Therefore, the first device may determine a time domain length of each ON pulse symbol and each OFF symbol (which are collectively referred to as an LP-WU symbol) in the LP-WU symbol based on a length of an OFDM symbol that is of the PCR and that is adjacent to a transmission channel used for transmitting the LP-WU symbol, so that the time domain length of the LP-WU symbol is aligned with that of the OFDM symbol of the PCR.

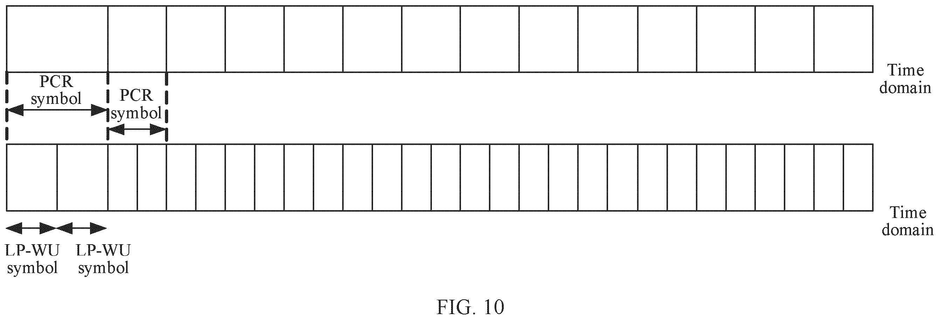

For example, if an OFDM subcarrier spacing of the PCR is $\Delta f_{PCR}$, a time domain length of the OFDM symbol of the PCR (which is denoted as a PCR symbol) is $T_{symbol,PCR}$, an OFDM subcarrier spacing of the LP-WUR is $\Delta f_{WUR}$, and a time domain length of an OFDM symbol of the LP-WUR (which is denoted as an LP-WU symbol) is $T_{symbol,WUR}$, $T_{symbol,PCR} = N \cdot T_{symbol,WUR}$, and $\Delta f_{WUR} = M \cdot \Delta f_{PCR}$, where both M and N are positive integers. In such a design, the length of the PCR symbol changes, and the length of the corresponding LP-WU symbol is also adjusted accordingly. As shown in FIG. 10, N=2 is used as an example. A time domain length of a PCR symbol is twice a time domain length of an LP-WU symbol. When the first symbol of the PCR is longer than another symbol, a corresponding LP-WU symbol is also longer. If the subcarrier spacing of the OFDM signal sent when the LP-WU symbol is an ON symbol is an integer multiple (for example, twice as shown in the figure) of the OFDM subcarrier spacing that is of the primary communication link of the first device and that is adjacent to the frequency domain resource that carries the OFDM signal, an LP-WU signal is zero at a sampling point of the PCR, so that interference caused by the LP-WUR to the PCR can be reduced, and impact of introducing the wake-up signal on the primary communication link can be reduced.

Optionally, one or more of whether there is a non-guard band between the LP-WU transmission channel and the transmission bandwidth of the first device, a size of the guard band, and a size of the LP-WU transmission channel may be determined by the second device by receiving signaling from the first device, or may be determined by the second device according to a predefined rule.

In a possible design, the first device notifies the second device of one or more of the foregoing parameters by using broadcast, multicast, or unicast signaling, so that the second device obtains the foregoing parameters.

In another possible design, the second device determines, according to a predefined rule, one or more of whether there is a guard band, a size of the guard band, and a size of the LP-WU transmission channel, to reduce signaling overheads. For example, the predefined rule is that there is no guard band between the LP-WU transmission channel and the transmission bandwidth of the first device, the transmission bandwidth of the first device does not include the LP-WU transmission channel, and the transmission bandwidth of the LP-WU channel is 180 kHz. In this way, the first device only needs to add a small amount of bit signaling to notify the second device whether there is an LP-WU transmission channel outside the transmission bandwidth of the first device. For example, "0" indicates that there is no LP-WU transmission channel outside the transmission bandwidth of the first device, and " 1" indicates that there are LP-WU transmission channels on the two sides of the edge of the transmission bandwidth of the first device. For another example, "0" indicates that there is no LP-WU transmission channel outside the transmission bandwidth of the first device, "1" indicates that there is an LP-WU transmission channel at the low frequency part at the edge of the transmission bandwidth of the first device, "2" indicates that there is an LP-WU transmission channel at the high frequency part at the edge of the transmission bandwidth of the first device, and "3" indicates that there are LP-WU transmission channels at both the high frequency part and the low frequency part at the edges of the transmission bandwidth of the first device.

Optionally, the first device may notify the second device whether the first device supports an LP-WU capability. The second device may be notified of in a manner of a system broadcast message, or in a multicast or unicast manner. For example, the first device notifies the second device in a broadcast manner. In this case, further, it may be agreed that, provided that the first device supports the LP-WU capability, there is one LP-WU transmission channel on each edge of the two sides of the configured carrier bandwidth of the first device.

The following describes in detail a possible design of numbering the LP-WU transmission channel.

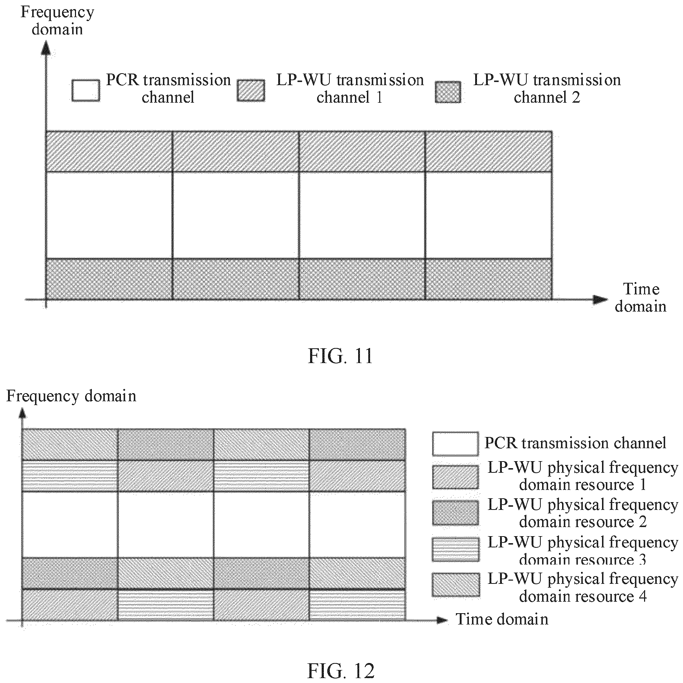

In a possible design, the LP-WU transmission channel may be numbered according to a predefined rule. In this manner, a manner of determining the LP-WU transmission channel is simple, and this also helps simplify signaling. For example, LP-WU transmission channels are sequentially numbered from a low frequency to a high frequency or from a high frequency to a low frequency. As shown in FIG. 11, there is one LP-WU transmission channel on each of two sides of a PCR transmission channel (namely, the foregoing transmission channel of the first device), and the LP-WU transmission channels are sequentially numbered from the high frequency to the low frequency, and are respectively an LP-WU transmission channel 1 and an LP-WU transmission channel 2. A frequency corresponding to the LP-WU transmission channel 1 is higher than a frequency corresponding to the LP-WU transmission channel 2. It may be understood that, there are a plurality of (for example, two) LP-WU transmission channels on each of the two sides of the PCR transmission channel, and the LP-WU transmission channels are sequentially numbered from the high frequency to the low frequency, and are respectively an LP-WU transmission channel 1, an LP-WU transmission channel 2, an LP-WU transmission channel 3, and an LP-WU transmission channel 4. A value relationship between frequencies corresponding to the LP-WU transmission channels 1 to 4 is: LP-WU transmission channel 1>LP-WU transmission channel 2>LP-WU transmission channel 3>LP-WU transmission channel 4.

In another possible design, that the LP-WU transmission channel is mapped to different physical frequencies in different time is defined, that is, frequency hopping is performed at a specific slot interval. This manner helps better resist frequency-selective fading. As shown in FIG. 12, there are two LP-WU physical frequency domain resources on each of two sides of a PCR transmission channel, there are four LP-WU physical frequency domain resources in total, and the four LP-WU physical frequency domain resources correspond to four different physical frequency domain resource blocks, and are respectively a physical frequency domain resource 1, a physical frequency domain resource 2, a physical frequency domain resource 3, and a physical frequency domain resource 4 from a low frequency to a high frequency. In different time, the LP-WU transmission channel corresponds to different LP-WU physical frequency domain resources, that is, the LP-WU transmission channel is mapped to different physical frequencies in different time. Without loss of generality, the LP-WU transmission channel 1 is used as an example. In the first slot, the LP-WU transmission channel 1 corresponds to the LP-WU physical frequency domain resource 4; in the second slot, the LP-WU transmission channel 1 corresponds to the LP-WU physical resource 2; in the third slot, the LP-WU transmission channel 1 corresponds to the LP-WU physical resource 4; and in the fourth slot, the LP-WU transmission channel 1 corresponds to the LP-WU physical resource 2. It may be learned that the LP-WU transmission channel is mapped to the physical frequency domain resource based on a specific cycle. That is, the LP-WU transmission channel is mapped to a same physical frequency domain resource at a specific slot interval (for example, at an interval of one slot). Similarly, the LP-WU transmission channel 2, the LP-WU transmission channel 3, and the LP-WU transmission channel 4 are mapped to different physical frequencies in different slots. Details are not enumerated herein again.

The following describes in detail two possible implementations of frequency hopping.

One wake-up signal receiving occasion includes a wake-up signal receiving occasion time domain resource and a wake-up signal receiving occasion frequency domain resource, the wake-up signal receiving occasion time domain resource includes a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on the two sides of the edge of the transmission bandwidth of the first device. In other words, the wake-up signal receiving occasion frequency domain resource includes at least two discontinuous wake-up signal receiving occasion frequency domain resources, and each wake-up signal receiving occasion frequency domain resource is an LP-WU transmission channel, for example, 180 kHz, in frequency domain.

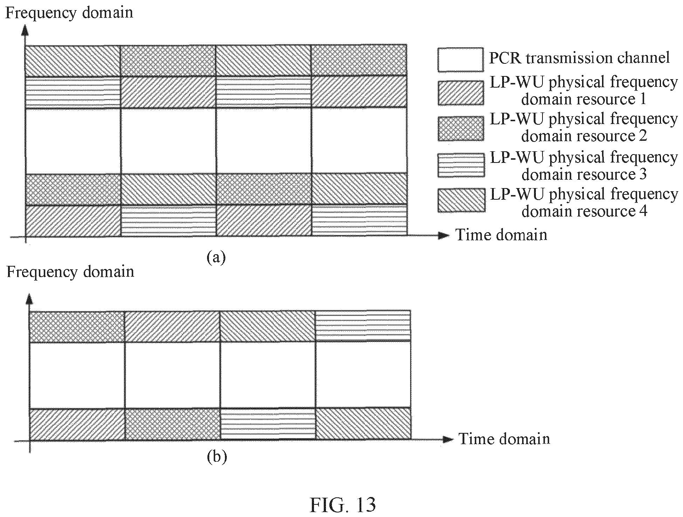

For example, one wake-up signal receiving occasion is divided into a plurality of parts in time domain, and each part may correspond to one of the at least two discontinuous wake-up signal receiving occasion frequency domain resources. Specifically, a length of one wake-up signal receiving occasion in time domain is T, and the wake-up signal receiving occasion includes N time period resources, that is, $T = \sum_{i=1}^{N} T_i$ . The wake-up signal receiving occasion separately corresponds to different LP-WU transmission channels in $T_i$ and $T_{i+1}$. This is frequency hopping in a general sense. Time of the LP-WU transmission channel in each transmission segment may be equal, or may be unequal. For example, to simplify a timing and synchronization process, duration of each time period is equal, that is, $T_1 = T_2 = \cdots = T_N$, where $T_i$ may be an integer multiple of a PCR slot. For example, if a length of the PCR slot is 0.5 ms (ms), $T_i$ is also 0.5 ms. FIG. 13 shows two possible designs of frequency hopping.

As shown in (a) in FIG. 13, there are two LP-WU physical frequency domain resources on each of two sides of a PCR transmission channel, there are four LP-WU physical frequency domain resources in total, and the four LP-WU physical frequency domain resources correspond to four different physical frequency domain resource blocks, and are respectively a physical frequency domain resource 1, a physical frequency domain resource 2, a physical frequency domain resource 3, and a physical frequency domain resource 4 from a low frequency to a high frequency. In different time, the LP-WU transmission channel corresponds to different LP-WU physical frequency domain resources, that is, the LP-WU transmission channel is mapped to different physical frequencies in different time. The LP-WU transmission channel 1 is used as an example. In the first slot, the LP-WU transmission channel corresponds to the LP-WU physical frequency domain resource 4; in the second slot, the LP-WU transmission channel 1 corresponds to the LP-WU physical frequency domain resource 2; in the third slot, the LP-WU transmission channel 1 corresponds to the LP-WU physical frequency domain resource 4; and in the fourth slot, the LP-WU transmission channel 1 corresponds to the LP-WU physical frequency domain resource 2. As shown in (b) in FIG. 13, there is one LP-WU transmission channel on each of two sides of a PCR transmission channel. An LP-WU transmission channel 1 is used as an example. In the first slot, the LP-WU transmission channel 1 corresponds to an LP-WU physical frequency domain resource 2; in the second slot, the LP-WU transmission channel 1 corresponds to an LP-WU physical frequency domain resource 1; in the third slot, the LP-WU transmission channel 1 corresponds to an LP-WU physical frequency domain resource 4; and in the fourth slot, the LP-WU transmission channel 1 corresponds to an LP-WU physical frequency domain resource 3.

As described above, the first device sends the wake-up sequence on the wake-up signal receiving occasion of the second device. Therefore, before sending the wake-up sequence, the first device needs to determine the wake-up signal receiving occasion. The following describes in detail several possible implementations in which the first device and the second device determine the wake-up signal receiving occasion.

Implementation 1: The first device determines total wake-up signal receiving occasions in a wake-up signal receiving occasion cycle (LP-wake up duty cycle), selects, from the total wake-up signal receiving occasions, a wake-up signal receiving occasion that may not be allocated, and configures the wake-up signal receiving occasion for the second device. For example, the first device determines a total quantity of wake-up signal receiving occasions on the wake-up signal receiving occasion cycle, and numbers all wake-up signal receiving occasions on the wake-up signal receiving occasion cycle. The first device selects one unused wake-up signal receiving occasion from the wake-up signal receiving occasions as the wake-up signal receiving occasion of the second device, and notifies the second device of a number corresponding to the wake-up signal receiving occasion.

Implementation 2: The first device numbers the LP-WU transmission channel. For example, the first device may number the LP-WU transmission channel according to a predefined rule, or the first device may automatically number the LP-WU transmission channel. Further, the first device determines a number corresponding to the LP-WU transmission channel of the second device. In a possible design, the first device may determine, according to the predefined rule, the number corresponding to the LP-WU transmission channel of the second device, so that signaling overheads can be reduced. For example, the number corresponding to the LP-WU transmission channel of the second device is (LP-WU ID of the second device) mod M, where M is a total quantity of LP-WU transmission channels of the first device. In another possible design, the first device allocates, to the second device, a number corresponding to the LP-WU transmission channel, and notifies the second device of the number.

Implementation 3: The first device determines start time $n_{o\_lp}$ of the wake-up signal receiving occasion of the second device, duration $n_{d\_lp}$ of the wake-up signal receiving occasion, and a wake-up signal receiving occasion cycle $N_{p\_lp}$, that is, determines a wake-up signal receiving occasion time domain resource. A slot number corresponding to the LP-WU link of the first device is $n_{s\_lp}^{\mu}$, a subframe number is $n_{sf\_lp}^{\mu}$, and a frame number is $n_{f\_lp}^{\mu}$. The subframe number and the frame number are the same as a subframe number and a frame number of the primary communication link. On the LP-WU link, starting from a subframe, every 14 consecutive OFDM symbols (for a normal CP) or 12 consecutive OFDM symbols (for an extended CP) are one slot, and are numbered from 0. In this case, the first device may determine that the wake-up signal receiving occasion starts from a slot that meets

$$(n_{f\_lp}^{\mu} \cdot N_{slot}^{frame,\mu} + n_{sf\_lp}^{\mu} \cdot N_{slot}^{subframe,\mu} + n_{sf\_lp}^{\mu} - n_{o\_lp}) \bmod N_{p\_lp} = 0$$

, and time that lasts for $n_{d\_lp}$ LP-WU slots is the wake-up signal receiving occasion, where $N_{slot}^{frame,\mu}$ indicates a quantity of frames, and $N_{slot}^{subframe,\mu}$ indicates a quantity of subframes. The first device may notify the second device of the start time of the wake-up signal receiving occasion of the second device, the duration of the wake-up signal receiving occasion, and the wake-up signal receiving occasion cycle through the primary communication link, or the second device and the first device determine, according to the predefined rule, at least one of the start time of the wake-up signal receiving occasion of the second device, the duration of the wake-up signal receiving occasion, and the wake-up signal receiving occasion cycle, so that signaling overheads can be reduced. For example, the first device and the second device may determine, according to the predefined rule, that the duration of the wake-up signal receiving occasion is 2 milliseconds.

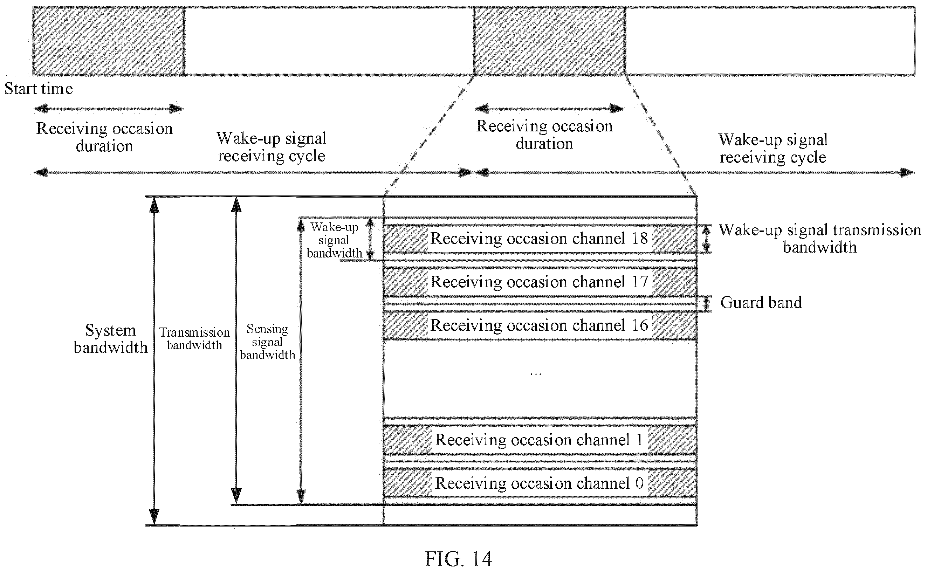

The following describes a structure of a wake-up signal receiving occasion frame with reference to FIG. 14. FIG. 14 is a diagram of a wake-up signal receiving occasion frame according to an embodiment of this application.

As shown in FIG. 14, each wake-up signal receiving cycle includes one or more wake-up signal receiving occasions (which are receiving occasions for short in the figure), and the figure shows start time and duration of each receiving occasion. The duration of each receiving occasion includes a plurality of wake-up signal receiving occasion channels (which are receiving occasion channels for short), and the foregoing plurality of frequency domain resources may be separately numbered, for example, receiving occasion channels 0 to 18 shown in the figure. It may be learned from the figure that there is a guard band deployed between wake-up signal transmission bandwidths, so that the wake-up signal transmission bandwidth is less than a wake-up signal bandwidth, and interference between channels can be reduced. In addition, a sensing signal (for example, wake-up signal) bandwidth is less than the transmission bandwidth, and the transmission bandwidth is less than the system bandwidth.

Implementation 4: The first device determines duration $n_{d\_lp}$ of the wake-up signal receiving occasion of the second device and the wake-up signal receiving occasion cycle $N_{p\_lp}$. The first device may determine that the wake-up signal receiving occasion starts from a slot that meets

$$(n_{f\_lp}^{\mu} \cdot N_{slot}^{frame,\mu} + n_{sf\_lp}^{\mu} \cdot N_{slot}^{subframe,\mu} + n_{sf\_lp}^{\mu} - n_{o\_lp}) \bmod N_{p\_lp} = 0$$

in time domain, and time that lasts for $n_{d\_lp}$ slots is the wake-up signal receiving occasion. The start time $n_{o\_lp}$ of the wake-up signal receiving occasion of the second device may be determined based on the LP-WU identity of the second device. For example, $n_{o\_lp}$ may be (LP-WU ID of the second device)/M mod (the wake-up signal receiving occasion cycle), where M is a total quantity of LP-WU transmission channels of the first device.

Implementation 5: The first device determines a wake-up signal receiving occasion cycle $N_{p\_lp}$, a frame offset (LP_offset) of the wake-up signal receiving occasion frame (LP wake-up frame), a quantity $N\_lp$ of wake-up signal receiving occasion frames in one wake-up signal receiving occasion cycle, and a quantity $Ns\_lp$ of wake-up signal receiving occasions in one wake-up signal receiving occasion frame, and determines a system frame number SFN of a system frame in which the wake-up signal receiving occasion is located according to the following formula:

$$(SFN + LP\_offset) \bmod N_{p\_lp} = (N_{p\_lp} \text{ div } N\_lp) \cdot ((LP\_WUR\_UE\_ID / M) \bmod N\_lp).$$

LP_WUR_UE_ID is an LP-WU user identity of the second device, and M is a total quantity of LP-WU transmission channels of the first device. The first device notifies the second device of one or more of the following through the primary communication link: the wake-up signal receiving occasion cycle, the frame offset of the wake-up signal receiving occasion frame, the quantity of wake-up signal receiving occasion frames in one wake-up signal receiving occasion cycle, and the quantity of wake-up signal receiving occasion in one wake-up signal receiving occasion frame, or the first device and the second device determine the foregoing one or more items according to the predefined rule.

In one wake-up signal receiving occasion frame, there are *Ns_lp* wake-up signal receiving occasions. A time-frequency position of each wake-up signal receiving occasion on the wake-up signal receiving occasion frame may be determined by the first device and then notified to the second device, or may be determined according to the predefined rule. For example, the first device determines that there are two wake-up signal receiving occasion subframes on the wake-up signal receiving occasion frame: a wake-up signal receiving occasion subframe 1 and a wake-up signal receiving occasion subframe 6, and each subframe includes 19 LP-WU subchannels. In this case, the wake-up signal receiving occasion frame includes 2*19=38 wake-up signal receiving occasion subframes. Numbering may be performed in frequency domain first and then in time domain. The wake-up signal receiving occasion of the second device is on an $(i\_s\_lp)^{th}$ wake-up signal receiving occasion, and *i_s_lp* is determined according to the following formula:

$$i\_s\_lp = floor(\text{LP\_WUR\_UE\_ID} / N\_lp) \bmod Ns\_lp$$

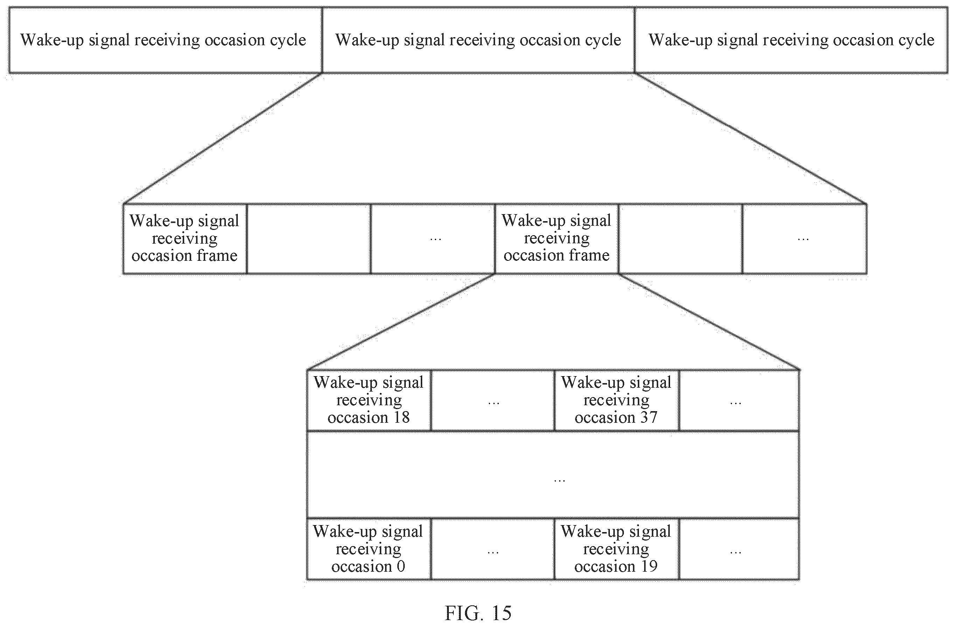

As shown in FIG. 15, the wake-up signal receiving occasion cycle includes one or more wake-up signal receiving occasion frames (where two wake-up signal receiving occasion frames are used as an example in the figure), each wake-up signal receiving occasion frame includes one or more wake-up signal receiving occasion subframes (where two wake-up signal receiving occasion subframes are used as an example in the figure), and each subframe includes 19 LP-WU subchannels, that is, each subframe includes 19 wake-up signal receiving occasions. In this case, the 19 wake-up signal receiving occasions are first numbered in ascending order in frequency domain, and are respectively LP-WU wake-up signal receiving occasions 0 to 18, and then LP-WU wake-up signal receiving occasions corresponding to the second subframe are numbered based on time domain numbers, and are respectively wake-up signal receiving occasions 19 to 37.

Implementation 6: The first device may further determine the wake-up signal receiving occasion of the second device based on a paging occasion of a primary receiver of the second device. Specifically, the wake-up signal receiving occasion of the second device advances Tproc,lp based on the paging occasion of the primary receiver of the second device, where Tproc,lp may be processing time for waking up the primary receiver by the LP-WUR. In this way, a paging message can be received immediately after the primary receiver is woken up, thereby reducing paging receiving time of the second device. A value of Tproc,lp may be determined based on a capability of the second device, or may be agreed to be a fixed value, for example, agreed to be 10 ms or 30 ms. In addition to considering time required for waking up a primary device of the second device, time for recovering synchronization with the first device after the second device wakes up the primary device also needs to be considered for the value of Tproc,lp. Generally, synchronization time is 20 ms, and hardware wake-up time of the primary device is 10 ms. Therefore, a preferred value of Tproc,lp is 30 ms.

It may be understood that a plurality of devices may share one wake-up signal receiving occasion. In this case, different devices may be distinguished in a spatial multiplexing or code division multiplexing manner. For example, a beam 1 is used for sending wake-up information to the second device, and a beam 2 is used for sending wake-up information to a third device.

For another example, different devices are distinguished by using different wake-up sequences. For example, if a sequence 1 is {B, B, B, B}, a sequence 2 is {B, $\overline{B}$, B, $\overline{B}$}, a sequence 3 is {$\overline{B}$, B, $\overline{B}$, B}, and a sequence 4 is {$\overline{B}$, $\overline{B}$, $\overline{B}$, $\overline{B}$}, the sequence 1 indicates to wake up the second device and not wake up the third device, the sequence 2 indicates to wake up the third device and not wake up the second device, the sequence 3 indicates to wake up the second device and the third device, and the sequence 4 indicates to not wake up the second device and the third device.

After determining the wake-up signal receiving occasion, the first device sends the wake-up sequence on the wake-up signal receiving occasion. Specifically, the first device modulates a bit "0" into a pulse waveform ON, modulates a bit "1" into a pulse waveform OFF, and generates and sends the modulated pulse waveforms, where a pulse includes L OFDM symbols, and L is an integer multiple of the wake-up sequence. Specifically, if an $l^{th}$ OFDM symbol is an "ON" symbol, a transmit pulse is generated through OFDM modulation, and a time domain of the pulse is represented as:

$$S_l^{(p,\mu)}(t) = \sum_{k=0}^{N_{grid}^{size,\mu} N_{SC}^{RB} - 1} a_{k,l}^{(p,\mu)} e^{j2\pi(k + k_0^{\mu} - N_{grid}^{size,\mu} N_{SC}^{RB}/2)\Delta f (t - N_{CP,l}^{\mu} T_C - t_{start,l}^{\mu})},$$

and

$$k_0^{\mu} = (N_{grid}^{start,\mu} + N_{grid}^{size,\mu} / 2)N_{SC}^{RB} - (N_{grid}^{start,\mu_0} + N_{grid}^{size,\mu_0} / 2)N_{SC}^{RB} 2^{\mu-\mu_0}$$

1 is a number of an OFDM symbol of a slot in which the pulse is located. If it is an extended CP, one slot includes 12 OFDM symbols; or if it is a normal CP, one slot includes 14 OFDM symbols. $\mu$ is an LP-WU frequency domain subcarrier spacing configuration value, and values may be integers, including a negative integer, zero, and a positive integer. $\mu_0$ is a maximum subcarrier spacing of the primary communication link, where a value of the maximum subcarrier spacing may be 120 kHz. $N_{SC}^{RB}$ is a quantity of subcarriers of each RB, $N_{SC}^{RB} = 12$, $N_{grid}^{start,\mu}$ is a start RB of the wake-up signal receiving occasion, and $N_{grid}^{size,\mu} N_{SC}^{RB}$ is an LP-WU transmission channel bandwidth. $t_{start,l}^{\mu} \leq t \leq t_{start,l}^{\mu} + T_{symb,l}^{\mu}$, $T_{symb,l}^{\mu}$ is duration of the $l$th OFDM symbol,

$$T_{symb,l}^{\mu} = (N_u^{\mu} + N_{CP,l}^{\mu})T_C \quad , \qquad N_u^{\mu} = 2048\kappa \cdot 2^{-\mu} \quad , \qquad \text{and}$$

$$N_{CP,l}^{\mu} = \begin{cases} 144\kappa \cdot 2^{-\mu} + 16\kappa, & \text{normal CP}, l = 0 \text{ or } l = 7 \cdot 2^{-\mu} \\ 144\kappa \cdot 2^{-\mu}, & \text{normal CP}, l \neq 0 \text{ or } l \neq 7 \cdot 2^{-\mu} \\ 512\kappa, & \text{extended CP} \end{cases}$$

. $T_C\text{-}l/(\Delta f_{max} \cdot N_f)$, $\Delta f_{max} = 480 \cdot 10^7 \text{Hz}$,

$N_f = 4096$, a constant $\kappa = T_S / T_C = 64$, $T_S = 1/(\Delta f_{ref} \cdot N_{f,ref})$, $\Delta f_{ref} = 15 \cdot 10^3 \text{Hz}$, and $N_{f,ref} = 2048$ . $a_{k,l}^{(p,\mu)}$ is an OFDM symbol $l$ corresponding to the wake-up signal receiving occasion, and is data sent on a subcarrier of a resource element (resource element, RB) of a subcarrier $k$. The data may be a predefined sequence, or may be a modulation signal sent by the first device to another device for receiving.

If the $l$th OFDM symbol is an "OFF" symbol, no signal is sent.

In the foregoing process, duration of the OFDM symbol is greater than or equal to 5 microseconds ($\mu$s) and less than or equal to 25 $\mu$s. If the duration of the OFDM symbol is greater than or equal to 5 $\mu$s, the duration of the OFDM symbol is greater than a multipath delay spread in a cellular wireless communication propagation environment, and performance of receiving the wake-up signal is improved; or if the duration of the OFDM symbol is less than or equal to 25 $\mu$s, wake-up sequence transmission duration can be reduced, and an LP-WUR receive power can be reduced. The subcarrier spacing used for transmitting the wake-up signal is an integer multiple of the subcarrier spacing of the PCR transmission channel adjacent to the LP-WU transmission channel. In this way, interference caused by transmission of the wake-up signal to the primary communication link can be avoided. For example, in a 5G cellular system, if the subcarrier spacing of the primary communication link is 30 kHz, the subcarrier spacing used for transmitting the wake-up signal is 60 kHz.

When the subcarrier spacing is 60 kHz, a value of the LP-WU transmission channel bandwidth $N_{grid}^{size,\mu} N_{SC}^{RB}$ may be 180 kHz, that is $N_{grid}^{size,\mu} = 1/2$, namely, a half RB. Alternatively, the LP-WU transmission channel bandwidth may be a larger value, for example, $N_{grid}^{size,\mu} = 3$, namely, three RBs; or $N_{grid}^{size,\mu} = 6$, namely, six RBs. As described above, the LP-WU transmission channel bandwidth is 180 kHz, is the same as an existing NB-IoT bandwidth, and is with better compatibility.

There are two types of CPs in the cellular system: an extended CP and a normal CP. The extended CP has a longer CP length, and each symbol in a slot using the extended CP is equal. The LP-WUR may use the extended CP or the normal CP. Duration of each OFDM symbol using the extended CP is equal. This simplifies an LP-WUR timing control mechanism. However, if the PCR adjacent to the LP-WU channel uses a normal CP, to avoid interference to a primary link of the adjacent PCR, the LP-WUR needs to use a CP type the same as that of the PCR.

S440: The second device determines the wake-up information based on the wake-up sequence.

After the wake-up signal receiving occasion receives the wake-up sequence, the second device determines the wake-up information based on the wake-up sequence. If the wake-up sequence indicating "wake-up" information is detected, a primary communication device is woken up; or if the sequence indicating "non-wake-up" information is detected, a primary communication device is not woken up.

In a possible implementation, the second device obtains a wake-up sequence X and/or a wake-up sequence Y based on the correspondence between the wake-up information and the wake-up sequence, where the wake-up sequence X indicates to wake up the second device, and the wake-up sequence Y indicates to not wake up the second device; and determines a local wake-up sequence X' and/or a local wake-up sequence Y' of the second device based on the wake-up sequence X and/or the wake-up sequence Y, where X'=2X -1, and Y'=2Y -1. Further, the second device determines the wake-up signal receiving occasion of the second device, and performs correlation with a received signal by using the local sequence X' and/or the local sequence Y' on the wake-up signal receiving occasion of the second device, to determine a correlation peak. If the correlation peak is greater than or equal to a preset threshold, the second device determines that the corresponding wake-up sequence is received. Finally, the second device determines the wake-up information based on the determined wake-up sequence.

Optionally, before the first device sends the wake-up sequence, the method further includes: The first device sends wake-up configuration information to the second device, where the wake-up configuration information includes one or more of the following: configuration information of the wake-up signal receiving occasion, the correspondence between the wake-up information and the wake-up sequence, the length of the wake-up sequence (the length of the orthogonal code), the LP-WU device identity of the second device, and effective time of an LP-WU mode of the second device.

For example, the first device sends the correspondence between the wake-up information and the wake-up sequence to the second device, so that after receiving the wake-up signal, the second device determines, based on the correspondence, whether to wake up the second device.

For another example, the first device sends the effective time of the LP-WU mode of the second device to the second device, where the effective time of the LP-WU mode of the second device includes time in which the second device enters the LP-WU mode of the second device and duration in which the second device enters the LP-WU mode.

It should be noted that, if the wake-up configuration information does not include the time in which the second device enters the LP-WU mode, the second device may immediately enter the LP-WU mode after receiving the wake-up configuration information, or the second device automatically determines time in which the second device enters the LP-WU mode.

Optionally, signaling used for carrying the wake-up configuration information is related to a state of the PCR of the second device.

For example, if the PCR of the second device is in an IDLE/INACTIVE state, the first device sends the wake-up configuration information to the second device by using a system information block (system information block, SIB). If the PCR of the second device is in a CONNECTED state, the first device sends the wake-up configuration information to the second device by using higher layer signaling, for example, an RRC reconfiguration message, or sends the wake-up configuration information to the second device by using an RRC release message. Further, if the PCR is in the CONNECTED state, the first device sends the wake-up configuration information to the second device by using the RRC reconfiguration message; if the PCR is from the CONNECTED state to the IDLE state, the first device sends the wake-up configuration information to the second device by using the RRC release message; or if the PCR is from the CONNECTED state to the INACTIVE state, the first device sends the wake-up configuration information to the second device by using a suspend configuration parameter (suspendConfig) in the RRC release message.

Optionally, before the first device sends the wake-up configuration information, the method further includes: The first device obtains information indicating whether the second device supports the LP-WU capability. The first device may obtain, in any one of the following manners, the information indicating whether the second device supports the LP-WU capability:

In the first manner, the second device sends, to the first device, the information indicating whether the LP-WU capability is supported.

In the second manner, the second device sends the information indicating whether the LP-WU capability is supported to a core network device, so that the core network device sends information about a capability of the second device to the first device. For example, the second device sends the information about the LP-WU capability to the core network device by using a user equipment radio paging message (UE Radio Paging Info). When paging the second device, the core network device sends the information about the capability of the second device to the first device by using the paging message for paging the second device.

According to the foregoing technical solution, the first device determines the wake-up information, that is, determines whether to wake up the second device; determines, based on the wake-up information, the wake-up sequence corresponding to the wake-up information; and modulates the wake-up sequence into the one or more LP-WU symbols, and sends the one or more LP-WU symbols. A frequency domain resource occupied for sending the LP-WU symbol is adjacent to the edge of the transmission bandwidth of the first device. Being adjacent to the edge of the transmission bandwidth of the first device may be understood as being adjacent to a highest value or a lowest value of a frequency of the transmission bandwidth of the first device. In this way, impact of transmitting the LP-WU symbol on spectrum efficiency of the primary communication link can be reduced, thereby helping ensure compatibility between a link for transmitting the LP-WU symbol (namely, an LP-WU link) and the primary communication link.

It may be understood that, in the embodiment shown in FIG. 4, if the $l$ th OFDM symbol is an "ON" symbol, a transmit pulse is generated through OFDM modulation, and a time domain of the pulse is represented as:

$$S_l^{(p,\mu)}(t) = \sum_{k=0}^{N_{grid}^{size,\mu}N_{SC}^{RB}-1} a_{k,l}^{(p,\mu)} e^{j2\pi(k+k_0^\mu-N_{grid}^{size,\mu}N_{SC}^{RB}/2)\Delta f(t-N_{CP,l}^\mu T_C-t_{start,l}^\mu)} \quad,$$

where $a_{k,l}^{(p,\mu)}$ is a modulation signal sent to another device (for example, the third device). In this manner, when sending the wake-up sequence to the second device, the first device may send the modulation signal to the third device, for example, a data signal or a reference signal that carries data information, to improve spectrum utilization.

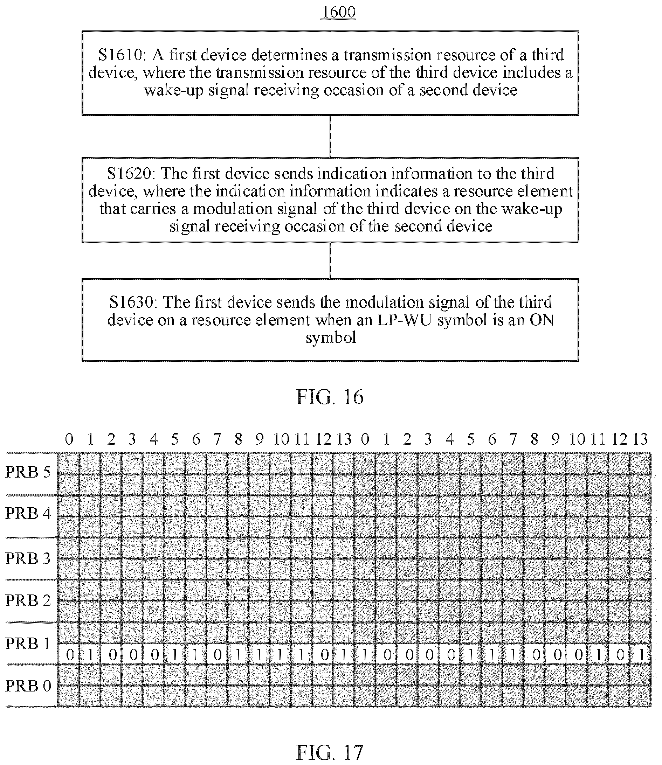

With reference to FIG. 16, the following describes in detail a method for receiving, by the third device, the modulation signal from the first device. The method 1600 shown in FIG. 16 includes S1610 to S 1640. The following describes in detail the steps in the method 1600.

S1610: A first device determines a transmission resource of a third device, where the transmission resource of the third device includes a wake-up signal receiving occasion of a second device.

The first device determines the transmission resource for the third device to receive data, where the transmission resource includes the wake-up signal receiving occasion. For example, the first device determines that a time domain resource used by the third device to receive data is a first slot, and a frequency domain resource used by the third device to receive data is a PRB 0 to a PRB 5. The PRB 1 includes a wake-up signal receiving occasion frequency domain resource.

S1620: The first device sends indication information to the third device, where the indication information indicates a resource element that carries a modulation signal of the third device on the wake-up signal receiving occasion of the second device.

It may be learned from the foregoing that the transmission resource of the third device determined by the first device includes the wake-up signal receiving occasion. Further, the first device may determine specific resource elements that are on the wake-up signal receiving occasion and that carry the modulation signal of the third device and specific resource elements that are on the wake-up signal receiving occasion and that do not carry the modulation signal of the third device, and indicate the resource elements to the third device, to improve receiving performance of the third device.

For example, the first device sends the indication information to the third device, where the indication information indicates the resource element that carries the modulation signal of the third device on the wake-up signal receiving occasion of the second device, and a resource element when an LP-WU symbol is an ON symbol may be the resource element that carries the modulation signal of the third device. Alternatively, the first device sends the indication information to the third device, where the indication information indicates the resource element that does not carry the modulation signal of the third device on the wake-up signal receiving occasion of the second device, and a resource element when an LP-WU symbol is an OFF symbol is the resource element that does not carry the modulation signal of the third device. Alternatively, the first device sends the indication information to the third device, where the indication information indicates the resource element that carries the modulation signal of the third device on the wake-up signal receiving occasion of the second device and the resource element that does not carry the modulation signal of the third device on the wake-up signal receiving occasion, a resource element when an LP-WU symbol is an ON symbol may be the resource element that carries the modulation signal of the third device, and a resource element when an LP-WU symbol is an OFF symbol is the resource element that does not carry the modulation signal of the third device.

The following describes in detail that the first device determines the resource element that carries or does not carry the modulation signal of the third device.

The first device determines, based on a determined wake-up sequence, whether to send data on each OFDM symbol in one slot. The wake-up sequence is referred to as a rate matching pattern set below. For example, "1" indicates that data is sent, and "0" indicates that no data is sent; or "0" indicates that data is sent, and "1" indicates that no data is sent. This is not limited in this embodiment of this application.

For example, a length of the wake-up sequence is 28 bits. A length of two slots of the third device is a receive length of one wake-up sequence, and the wake-up sequences determined by the first device are a sequence X={010 001 101 111 011 000 011 100 010 1} and a sequence Y=$\overline{X}$={101 110 010 000 100 111 100 011 101 0}. In this case, there are four rate matching patterns, and are respectively RM1={010 001 101 111 01}, RM2={1 000 011 100 010 1}, RM3={101 110 010 000 10}, and RM4={0 111 100 011 101 0}. That is, the rate matching patterns are the first 14 bits and the last 14 bits of the sequence X, and the first 14 bits and the last 14 bits of the sequence Y

After determining the rate matching patterns, the first device may send the indication information to the third device. For example, the first device may indicate the rate matching pattern set to the third device by using higher layer signaling, or the third device determines the rate matching pattern set according to a predefined rule.

In an example, the third device determines the rate matching pattern set according to the predefined rule. For example, the predefined rule is that the first rate matching pattern is the first 14 bits of the sequence X, the second rate matching pattern is the last 14 bits of the sequence X, the third rate matching pattern is the first 14 bits of the sequence Y, and the fourth rate matching pattern is the last 14 bits of the sequence Y

The rate matching pattern is a time domain pattern, namely, a pattern indicating whether data is sent in time domain. Further, the rate matching pattern further includes a rate matching frequency domain pattern, and specifically a position of a physical frequency domain resource on which rate matching is performed. The rate matching frequency domain pattern indicates a physical resource block on which rate matching is performed.

It may be understood that when a frequency domain resource occupied by a wake-up signal is less than one PRB, an RE on which rate matching is performed is further indicated. This helps further improve resource utilization.

For example, a subcarrier spacing is 30 kHz, a frequency domain resource occupied by the wake-up signal is 180 kHz, namely, six subcarriers, and one PRB is 12 subcarriers. In this case, further, one bit indicates whether rate matching is performed on an upper half part or a lower half part of the PRB. As shown in FIG. 17, a frequency domain resource used by the third device to receive data is a PRB 0 to a PRB 5, and a frequency domain resource occupied by the wake-up signal is a lower half PRB of the PRB 1. In this case, the first device needs to indicate that the frequency domain resource occupied by the wake-up signal of the third device is the lower half PRB of the PRB 1. In addition, the first device further needs to indicate whether the third device sends the modulation signal of the third device on each symbol in the lower half PRB of the PRB 1. "0" indicates that the modulation signal of the third device is not sent, and "1" indicates that the modulation signal of the third device is sent.

S1630: The first device sends the modulation signal of the third device on the resource element when LP-WU symbol is the ON symbol. Correspondingly, the third device receives the modulation signal from the first device on the resource element when LP-WU symbol is the ON symbol.

In other words, the first device may not send the modulation signal of the third device on the resource element when LP-WU symbol is the OFF symbol.

When sending the modulation signal of the third device, the first device may apply the determined rate matching pattern. For example, the first device determines that a rate matching pattern in the first slot is RM1, and a rate matching pattern in the second slot is RM2.

With reference to FIG. 17, the first slot is used as an example. The first device allocates a time-frequency resource to the third device in the first slot, where the allocated time-frequency resource includes a time-frequency resource corresponding to the wake-up signal receiving occasion. In this case, the first device performs, based on the determined rate matching pattern, rate matching on the modulation signal sent to the third device, that is, when the modulation signal is sent to the third device, no signal is sent on a physical resource corresponding to OFF. For example, as shown in FIG. 16, no signal is sent on the first six subcarriers of the PRB 1 on symbols 0, 2, 3, 4, 7, and 12.

According to the foregoing technical solution, when sending the wake-up sequence to the second device, the first device may carry the modulation signal sent to the third device, to help improve spectrum utilization. Further, the first device may determine the resource element that carries the modulation signal of the third device on the wake-up signal receiving occasion and the resource element that does not carry the modulation signal of the third device on the wake-up signal receiving occasion, and indicate the resource element to the third device, to help improve performance of receiving the modulation signal by the third device.

In the embodiment shown in FIG. 4, a correspondence between the wake-up information and the wake-up sequence may be related to a cell identity. The following describes in detail that different cells correspond to different correspondences.

For example, a cell in which the first device is located is a cell 1. In the cell 1, the first device sends the wake-up sequence to the second device, and sends, to the third device, a modulation signal that carries data information. A neighboring cell of the cell 1 is a cell 2. In the cell 2, a fourth device sends the wake-up sequence to a fifth device, and sends, to a sixth device, a modulation signal that carries data information.

In the foregoing scenario, the cell 1 corresponds to one correspondence between wake-up information and a wake-up sequence, and the cell 2 corresponds to one correspondence between wake-up information and a wake-up sequence. In this case, the first device may determine the correspondence, between the wake-up information and the wake-up sequence, of the cell 1 based on wake-up configuration information of the fourth device (which includes the correspondence, between the wake-up information and the wake-up sequence, of the cell 2).

For example, the wake-up sequence includes two sequences: a sequence X and a sequence Y, where the sequence X is bitwise logical NOT of the sequence Y The first device and the fourth device separately use a correspondence 1 or a correspondence 2. The correspondence 1 and the correspondence 2 are shown in Table 1. In the correspondence 1, the sequence X indicates wake-up, and the sequence Y indicates non-wake-up. In the correspondence 2, the sequence X indicates non-wake-up, and the sequence Y indicates wake-up.

Table 1

| Correspondence 1 | | Correspondence 2 | |
|---|---|---|---|
| Sequence | Wake-up information | Sequence | Wake-up information |
| Sequence X | Wake-up | Sequence X | Non-wake-up |

(continued)

| Correspondence 1 | | Correspondence 2 | |
|---|---|---|---|
| Sequence | Wake-up information | Sequence | Wake-up information |
| Sequence Y | Non-wake-up | Sequence Y | Wake-up |

The first device and the fourth device may send respective correspondences between wake-up information and wake-up sequences to each other, or may determine correspondences between wake-up information and wake-up sequences according to a predefined rule. For example, a cell whose cell ID is an odd number uses the correspondence 1, and a cell whose cell ID is an even number uses the correspondence 2.

Optionally, wake-up signal receiving occasion time domain resources of the first device and the fourth device overlap.

The first device and the fourth device send wake-up sequences at same time, but the sent sequences are opposite to each other. For example, the first device sends the sequence X to indicate wake-up, and the fourth device sends the sequence Y to indicate non-wake-up. In this way, for the third device that simultaneously receives the modulation signal of the first device, when the third device receives a signal, the fourth device does not send a signal on a corresponding time-frequency resource, so that interference caused by the third device to receive data on the wake-up signal receiving occasion can be reduced. Similarly, for the sixth device, when the sixth device receives a signal, the first device does not send a signal on a corresponding time-frequency resource, so that interference caused by the sixth device to receive data on the wake-up signal receiving occasion can be reduced.

According to the foregoing technical solution, the correspondence between the wake-up sequence and the wake-up information of the cell in which the first device is located may be different from a correspondence of a neighboring cell, so that interference of a signal sent between cells can be reduced. For example, interference of data carried in the wake-up sequence can be reduced, thereby improving data receiving reliability.

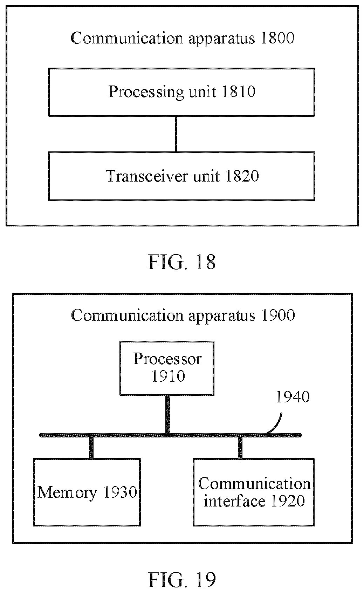

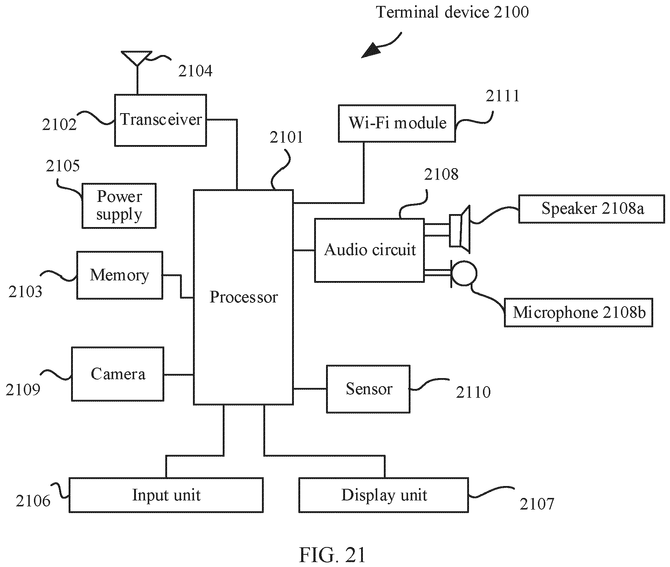

FIG. 18 and FIG. 21 are diagrams of structures of possible communication apparatuses according to embodiments of this application.

FIG. 18 is a block diagram of a communication apparatus 1800 according to an embodiment of this application.

As shown in FIG. 18, the communication apparatus 1800 includes a processing unit 1810 and a transceiver unit 1820.

The apparatus 1800 may be configured to implement a function of the terminal device (for example, the second device or the third device) in the foregoing method embodiments. Alternatively, the apparatus 1800 may include a module configured to implement any function or operation of the terminal device in the foregoing method embodiments. The module may be all or partially implemented by using software, hardware, firmware, or any combination thereof. The apparatus 1800 is configured to implement a function of the access network device (for example, the first device) in the foregoing method embodiments. Alternatively, the apparatus 1800 may include a module configured to implement any function or operation of the access network device in the foregoing method embodiments. The module may be all or partially implemented by using software, hardware, firmware, or any combination thereof.

For example, when the apparatus 1800 is configured to implement the function of the terminal device (for example, the second device) in the method embodiment shown in FIG. 4, the transceiver unit 1820 may be configured to receive a wake-up sequence from a first device on a wake-up signal receiving occasion, where the wake-up sequence is a binary bit sequence, each bit of the wake-up sequence is modulated into one or more LP-WU symbols through OOK, the wake-up signal receiving occasion includes a wake-up signal receiving occasion frequency domain resource, and the wake-up signal receiving occasion frequency domain resource is adjacent to an edge of a transmission bandwidth of the first device in frequency domain; and the processing unit 1710 may be configured to determine wake-up information based on the wake-up sequence, where the wake-up information is used for waking up the second device, or is used for not waking up the second device.

For example, when the apparatus 1800 is configured to implement the function of the access network device (for example, the first device) in the method embodiment shown in FIG. 4, the processing unit 1810 may be configured to: determine wake-up information, where the wake-up information is used for waking up a second device, or is used for not waking up a second device; and determine a wake-up sequence based on the wake-up information, where the wake-up sequence is a binary bit sequence; and the transceiver unit 1820 may be configured to send the wake-up sequence to the second device on a wake-up signal receiving occasion of the second device, where each bit of the wake-up sequence is modulated into one or more low power wake-up LP-WU symbols through OOK, the wake-up signal receiving occasion includes a wake-up signal receiving occasion frequency domain resource, and the wake-up signal receiving occasion frequency domain resource is adjacent to an edge of a transmission bandwidth of the first device in frequency domain.

For more detailed descriptions about the processing unit 1810 and the transceiver unit 1820, directly refer to related descriptions in the foregoing method embodiments. Details are not described herein again.

It should be understood that division into the units in embodiments of this application is an example, and is merely logical function division. During actual implementation, there may be another division manner. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

FIG. 19 is another block diagram of a communication apparatus 1900 according to an embodiment of this application. The apparatus 1900 may be a chip system, or may be an apparatus configured with a chip system to implement a communication function in the foregoing method embodiments. In this embodiment of this application, the chip system may include a chip, or may include a chip and another discrete component.

As shown in FIG. 19, the apparatus 1900 may include a processor 1910 and a communication interface 1920. The communication interface 1920 may be configured to communicate with another device by using a transmission medium, so that the apparatus 1900 may communicate with another device. The communication interface 1920 may be, for example, a transceiver, an interface, a bus, a circuit, or an apparatus that can implement receiving and sending functions. The processor 1910 may input/output data through the communication interface 1920, and is configured to implement the method in the embodiment corresponding to FIG. 4, FIG. 5, or FIG. 16. Specifically, the apparatus 1900 may be configured to implement functions of the first device, the second device, or the third device in the foregoing method embodiments.

When the apparatus 1900 is configured to implement the method shown in FIG. 4, FIG. 5, or FIG. 16, the processor 1910 is configured to implement a function of the processing unit 1810, and the communication interface 1920 is configured to implement a function of the transceiver unit 1820.

Optionally, the apparatus 1900 further includes at least one memory 1930, configured to store program instructions and/or data. The memory 1930 is coupled to the processor 1910. The coupling in this embodiment of this application may be an indirect coupling or a communication connection between apparatuses, units, or modules in an electrical form, a mechanical form, or another form, and is used for information exchange between the apparatuses, the units, or the modules. The processor 1910 may cooperate with the memory 1930. The processor 1910 may execute the program instructions stored in the memory 1930. At least one of the at least one memory may be included in the processor.

In this embodiment of this application, a specific connection medium between the processor 1910, the communication interface 1920, and the memory 1930 is not limited. In this embodiment of this application, in FIG. 19, the processor 1910, the communication interface 1920, and the memory 1930 are connected through a bus 1940. The bus 1940 is represented by a bold line in FIG. 19, and a manner of connection between other components is merely an example for description, and is not limited thereto. The bus may be classified into an address bus, a data bus, a control bus, and the like. For ease of representation, the bus is represented by using only one bold line in FIG. 19. However, this does not indicate that there is only one bus or only one type of bus.

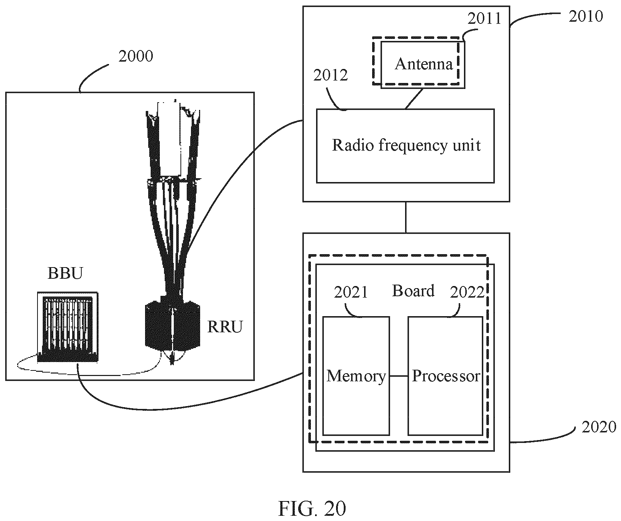

FIG. 20 is a diagram of a structure of an access network device according to an embodiment of this application, for example, may be a diagram of a structure of a base station. The base station 2000 may perform a function of the access network device in the foregoing method embodiments. As shown in FIG. 20, the base station 2000 may include one or more radio frequency units, for example, one or more remote radio units (remote radio units, RRUs) 2010, and one or more baseband units (BBUs) (which may also be referred to as distributed units (DUs)) 2020. The RRU 2010 may be referred to as a transceiver unit, and corresponds to the transceiver unit 1820 in FIG. 18. Optionally, the RRU 2010 may also be referred to as a transceiver, a transceiver circuit, or the like, and may include at least one antenna 2011 and a radio frequency unit 2012. Optionally, the RRU 2010 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 2010 is mainly configured to receive/send a radio frequency signal and perform conversion between a radio frequency signal and a baseband signal, for example, configured to send configuration information to a terminal device. The BBU 2020 is mainly configured to perform baseband processing, control a base station, and the like. The RRU 2010 and the BBU 2020 may be physically disposed together, or may be physically separated, namely, a distributed base station.

The BBU 2020 is a control center of the base station, may also be referred to as a processing unit, and may correspond to the processing unit 1810 in FIG. 18. The BBU 2020 is mainly configured to implement a baseband processing function, for example, channel coding, multiplexing, modulation, and spreading. For example, the BBU (the processing unit) may be configured to control the base station to perform an operation procedure related to the network device in the foregoing method embodiments.

In an example, the BBU 2020 may include one or more boards, and a plurality of boards may jointly support a radio access network (for example, an LTE network) having a single access standard, or may separately support radio access networks (for example, an LTE network, a 5G network, or another network) having different access standards. The BBU 2020 further includes a memory 2021 and a processor 2022. The memory 2021 is configured to store necessary instructions and data. The processor 2022 is configured to control the base station to perform a necessary action, for example, configured to control the base station to perform an operation procedure related to the access network device in the foregoing method embodiments. The memory 2021 and the processor 2022 may serve one or more boards. In other words, a memory and a processor may be disposed on each board. Alternatively, a plurality of boards may share a same memory and a same processor. In addition, a necessary circuit may be further disposed on each board.

It should be understood that the base station 2000 shown in FIG. 20 can implement processes related to the access network device in the foregoing method embodiments. Operations and/or functions of the modules in the base station 2000 are respectively intended to implement corresponding procedures in the foregoing method embodiments. For details, refer to the descriptions in the foregoing method embodiments. To avoid repetition, detailed descriptions are properly omitted herein.

FIG. 21 is a diagram of a structure of a terminal device according to an embodiment of this application. The terminal device 2100 has a function of the terminal device in the embodiment shown in FIG. 4. As shown in FIG. 21, the terminal device 2100 includes a processor 2101 and a transceiver 2102. Optionally, the terminal device 2100 further includes a memory 2103. The processor 2101, the transceiver 2102, and the memory 2103 may communicate with each other through an internal connection path to transfer a control signal and/or a data signal. The memory 2103 is configured to store a computer program. The processor 2101 is configured to invoke the computer program from the memory 2103 and run the computer program, to control the transceiver 2102 to receive/send a signal. Optionally, the terminal device 2100 may further include an antenna 2104, configured to send, by using a radio signal, uplink data or uplink control signalling output by the transceiver 2102. Optionally, the terminal device 2100 further includes a Wi-Fi module 2111, configured to access a wireless network.

The processor 2101 and the memory 2103 may be integrated into one processing apparatus. The processor 2101 is configured to execute program code stored in the memory 2103, to implement the foregoing functions. During specific implementation, the memory 2103 may alternatively be integrated into the processor 2101, or may be independent of the processor 2101. The processor 2101 may correspond to the processing unit 1810 in FIG. 18 or the processor 1910 in FIG. 19.

The transceiver 2102 may correspond to the transceiver unit 1820 in FIG. 18 or the communication interface 1920 in FIG. 19. The transceiver 2102 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 2100 may further include a power supply 2105, configured to supply power to various components or circuits in the terminal device 2100.

In addition, to improve functions of the terminal device, the terminal device 2100 may further include one or more of an input unit 2106, a display unit 2107, an audio circuit 2108, a camera 2109, a sensor 2110, and the like, and the audio circuit may further include a speaker 2108a, a microphone 2108b, and the like.

It should be understood that the terminal device 2100 shown in FIG. 21 can implement processes related to the terminal device in the method embodiment shown in FIG. 4. Operations and/or functions of the modules in the terminal device 2100 are respectively intended to implement corresponding procedures in the foregoing method embodiments. For details, refer to the descriptions in the foregoing method embodiments. To avoid repetition, detailed descriptions are properly omitted herein.

This application further provides a computer program product. The computer program product includes a computer program (which may also be referred to as code or instructions). When the computer program is run, a computer is enabled to perform the method in FIG. 4, FIG. 5, or FIG. 16.

This application further provides a computer-readable storage medium. The computer-readable storage medium stores a computer program (which may also be referred to as code or instructions). When the computer program is run, a computer is enabled to perform the method in FIG. 4, FIG. 5, or FIG. 16.

An embodiment of this application provides a communication system. The system includes the first device, the second device, and the third device described above.

It should be noted that the processor in embodiments of this application may be an integrated circuit chip, and has a signal processing capability. In an implementation process, steps in the foregoing method embodiments can be implemented through a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register.

The storage medium is located in the memory, and the processor reads information in the memory and completes the steps in the foregoing methods in combination with hardware of the processor.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed. The units and modules in embodiments of this application have a same meaning, and may be used in a cross manner.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When the software is used to implement embodiments, all or some of embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A device wake-up method, comprising:

   determining, by a first device, wake-up information, wherein the wake-up information is used for waking up a second device, or is used for not waking up a second device;
   determining, by the first device, a wake-up sequence based on the wake-up information, wherein the wake-up sequence is a binary bit sequence; and
   sending, by the first device, the wake-up sequence to the second device on a wake-up signal receiving occasion of the second device, wherein each bit of the wake-up sequence is modulated into one or more low power wake-up LP-WU symbols through on-off keying OOK, the wake-up signal receiving occasion comprises a wake-up signal receiving occasion frequency domain resource, and the wake-up signal receiving occasion frequency domain resource is adjacent to an edge of a transmission bandwidth of the first device in frequency domain.

2. The method according to claim 1, wherein duration of one of the one or more LP-WU symbols is T1, and duration of a symbol that is of a primary communication link of the first device and that overlaps the LP-WU symbol in time domain is N*T1, wherein N is an integer greater than or equal to 1.

3. The method according to claim 1 or 2, wherein the wake-up signal receiving occasion frequency domain resource is located in a system bandwidth of the first device; and
   there is no guard band between the wake-up signal receiving occasion frequency domain resource and the edge of the transmission bandwidth of the first device.

4. The method according to any one of claims 1 to 3, wherein the wake-up signal receiving occasion further comprises a wake-up signal receiving occasion time domain resource, the wake-up signal receiving occasion time domain resource comprises a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the first device.

5. The method according to any one of claims 1 to 4, wherein the determining, by the first device, a wake-up sequence based on the wake-up information comprises:

   determining, by the first device, a correspondence between at least one wake-up sequence and at least one piece of wake-up information; and
   determining, by the first device, the wake-up sequence based on the wake-up information and the correspondence between the at least one wake-up sequence and the at least one piece of wake-up information.

6. The method according to claim 5, wherein the correspondence between the at least one wake-up sequence and the at least one type of wake-up information is related to an identity of a cell in which the first device is located.

7. The method according to claim 5 or 6, wherein the at least one wake-up sequence is determined based on a same basic sequence, and a length of the basic sequence is M* 12 or a length of the basic sequence is K*14, wherein M and K are integers greater than or equal to 1.

8. The method according to claim 7, wherein when the length of the basic sequence is 12 bits, the basic sequence is [001 001 110 101], [001 111 001 010], [010 001 111 001], [010 100 111 100], [010 110 001 101], [010 110 100 011], or [010 111 001 001];

   when the length of the basic sequence is 14 bits, the basic sequence is [010 101 111 001 00];

when the length of the basic sequence is 24 bits, the basic sequence is [010 101 100 100 101 111 000 110], [111 011 000 100 100 111 000 101], or [110 010 101 111 000 010 010 011];

when the length of the basic sequence is 28 bits, the basic sequence is [010 001 101 111 011 000 011 100 010 1]; or

when the length of the basic sequence is 36 bits, the basic sequence is [101 101 010 010 011 010 011 001 110 000 011 101] or [110 110 000 100 011 101 010 010 111 001 011 100].

9. The method according to claim 7, wherein the basic sequence is a pseudo-random sequence, and an initial value of the pseudo-random sequence is related to one or more of the following:

the cell identity of the first device, a radio access network identity of the first device, a tracking area identity of the first device, an LP-WU identity of the second device, or a state of the second device.

10. The method according to any one of claims 1 to 9, comprising: when the LP-WU symbol is an ON symbol, sending, by the first device, on the LP-WU symbol, an OFDM signal whose subcarrier spacing is a first spacing, wherein the first spacing is an integer multiple of an OFDM subcarrier spacing that is of the primary communication link of the first device and that is adjacent to a frequency domain resource that carries the OFDM signal; and/or

when the LP-WU symbol is an OFF symbol, skipping, by the first device, sending a signal.

11. The method according to any one of claims 1 to 10, wherein the method further comprises:

determining, by the first device, a transmission resource of a third device, wherein the transmission resource of the third device comprises the wake-up signal receiving occasion of the second device;

sending, by the first device, indication information to the third device, wherein the indication information indicates a resource element that carries a modulation signal of the third device on the wake-up signal receiving occasion of the second device, and a resource element when the LP-WU symbol is the ON symbol is the resource element that carries the modulation signal of the third device; and/or the indication information indicates a resource element that does not carry a modulation signal of the third device on the wake-up signal receiving occasion of the second device, and a resource element when the LP-WU symbol is the OFF symbol is the resource element that does not carry the modulation signal of the third device; and

sending, by the first device, the modulation signal of the third device on the resource element when the LP-WU symbol is the ON symbol; and/or

skipping, by the first device, sending the modulation signal of the third device on the resource element when the LP-WU symbol is the OFF symbol.

12. A device wake-up method, comprising:

receiving, by a second device, a wake-up sequence from a first device on a wake-up signal receiving occasion, wherein the wake-up sequence is a binary bit sequence, each bit of the wake-up sequence is modulated into one or more LP-WU symbols through on-off keying OOK, the wake-up signal receiving occasion comprises a wake-up signal receiving occasion frequency domain resource, and the wake-up signal receiving occasion frequency domain resource is adjacent to an edge of a transmission bandwidth of the first device in frequency domain; and

determining, by the second device, wake-up information based on the wake-up sequence, wherein the wake-up information is used for waking up the second device, or is used for not waking up the second device.

13. The method according to claim 12, wherein duration of one of the one or more LP-WU symbols is T1, and duration of a symbol that is of a primary communication link of the first device and that overlaps the LP-WU symbol in time domain is N*T1, wherein N is an integer greater than or equal to 1.

14. The method according to claim 12 or 13, wherein the wake-up signal receiving occasion frequency domain resource is located in a system bandwidth of the first device; and

there is no guard band between the wake-up signal receiving occasion frequency domain resource and the edge of the transmission bandwidth of the first device.

15. The method according to any one of claims 12 to 14, wherein the wake-up signal receiving occasion further comprises a wake-up signal receiving occasion time domain resource, the wake-up signal receiving occasion time domain resource comprises a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the first device.

16. The method according to any one of claims 12 to 15, wherein the determining, by the second device, wake-up information based on the wake-up sequence comprises:

determining, by the second device, a correspondence between at least one wake-up sequence and at least one piece of wake-up information; and

determining, by the second device, the wake-up information based on the wake-up sequence and the correspondence between the at least one wake-up sequence and the at least one piece of wake-up information.

17. The method according to claim 16, wherein the correspondence between the at least one wake-up sequence and the at least one type of wake-up information is related to an identity of a cell in which the first device is located.

18. The method according to claim 16 or 17, wherein the at least one wake-up sequence is determined based on a same basic sequence, and a length of the basic sequence is M* 12 or a length of the basic sequence is K* 14, wherein M and K are integers greater than or equal to 1.

19. The method according to claim 18, wherein when the length of the basic sequence is 12 bits, the basic sequence is [001 001 110 101], [001 111 001 010], [010001 111 001], [010 100 111 100], [010 110 001 101], [010 110 100 011], or [010 111 001 001];

when the length of the basic sequence is 14 bits, the basic sequence is [010 101 111 001 00];

when the length of the basic sequence is 24 bits, the basic sequence is [010 101 100 100 101 111 000 110], [111 011 000 100 100 111 000 101], or [110 010 101 111 000 010 010 011];

when the length of the basic sequence is 28 bits, the basic sequence is [010 001 101 111 011 000 011 100 010 1]; or

when the length of the basic sequence is 36 bits, the basic sequence is [101 101 010 010 011 010 011 001 110 000 011 101] or [110 110 000 100 011 101 010 010 111 001 011 100].

20. The method according to claim 18, wherein the basic sequence is a pseudo-random sequence, and an initial value of the pseudo-random sequence is related to one or more of the following:
the cell identity of the first device, a radio access network identity of the first device, a tracking area identity of the first device, an LP-WU identity of the second device, or a state of the second device.

21. A device wake-up method, comprising:

receiving, by a third device, indication information, wherein the indication information indicates a resource element that carries a modulation signal of the third device, and/or the indication information indicates a resource element that does not carry a modulation signal of the third device; and the resource element is located on a wake-up signal receiving occasion of a second device; and

receiving, by the third device, the modulation signal of the third device from a first device based on the indication information.

22. A communication apparatus, comprising:

a processing unit, configured to determine wake-up information, wherein the wake-up information is used for waking up a second device, or is used for not waking up a second device; and

the processing unit is further configured to determine a wake-up sequence based on the wake-up information, wherein the wake-up sequence is a binary bit sequence; and

a transceiver unit, configured to send the wake-up sequence to the second device on a wake-up signal receiving occasion of the second device, wherein each bit of the wake-up sequence is modulated into one or more low power wake-up LP-WU symbols through on-off keying OOK, the wake-up signal receiving occasion comprises a wake-up signal receiving occasion frequency domain resource, and the wake-up signal receiving occasion frequency domain resource is adjacent to an edge of a transmission bandwidth of the apparatus in frequency domain.

23. The apparatus according to claim 22, wherein duration of one of the one or more LP-WU symbols is T1, and duration of a symbol that is of a primary communication link of the apparatus and that overlaps the LP-WU symbol in time domain is N*T1, wherein N is an integer greater than or equal to 1.

24. The apparatus according to claim 22 or 23, wherein the wake-up signal receiving occasion frequency domain resource is located in a system bandwidth of the apparatus; and
there is no guard band between the wake-up signal receiving occasion frequency domain resource and the edge of the transmission bandwidth of the apparatus.

25. The apparatus according to any one of claims 22 to 24, wherein the wake-up signal receiving occasion further comprises a wake-up signal receiving occasion time domain resource, the wake-up signal receiving occasion time domain resource comprises a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the apparatus.

26. The apparatus according to any one of claims 22 to 25, wherein the processing unit is specifically configured to:

    determine a correspondence between at least one wake-up sequence and at least one piece of wake-up information; and
    determine the wake-up sequence based on the wake-up information and the correspondence between the at least one wake-up sequence and the at least one piece of wake-up information.

27. The apparatus according to claim 26, wherein the correspondence between the at least one wake-up sequence and the at least one type of wake-up information is related to an identity of a cell in which the apparatus is located.

28. The apparatus according to claim 26 or 27, wherein the at least one wake-up sequence is determined based on a same basic sequence, and a length of the basic sequence is M* 12 or a length of the basic sequence is K* 14, wherein M and K are integers greater than or equal to 1.

29. The apparatus according to claim 28, wherein when the length of the basic sequence is 12 bits, the basic sequence is [001 001 110 101], [001 111 001 010], [010 001 111 001], [010 100 111 100], [010 110 001 101], [010 110 100 011], or [010 111 001 001];

    when the length of the basic sequence is 14 bits, the basic sequence is [010 101 111 001 00];
    when the length of the basic sequence is 24 bits, the basic sequence is [010 101 100 100 101 111 000 110], [111 011 000 100 100 111 000 101], or [110 010 101 111 000 010 010 011];
    when the length of the basic sequence is 28 bits, the basic sequence is [010 001 101 111 011 000 011 100 010 1]; or
    when the length of the basic sequence is 36 bits, the basic sequence is [101 101 010 010 011 010 011 001 110 000 011 101] or [110 110 000 100 011 101 010 010 111 001 011 100].

30. The apparatus according to claim 28, wherein the basic sequence is a pseudo-random sequence, and an initial value of the pseudo-random sequence is related to one or more of the following:
the cell identity of the apparatus, a radio access network identity of the apparatus, a tracking area identity of the apparatus, an LP-WU identity of the second device, or a state of the second device.

31. The apparatus according to any one of claims 22 to 30, wherein the transceiver unit is specifically configured to:

    when the LP-WU symbol is an ON symbol, send, on the LP-WU symbol, an OFDM signal whose subcarrier spacing is a first spacing, wherein the first spacing is an integer multiple of an OFDM subcarrier spacing that is of the primary communication link of the apparatus and that is adjacent to a frequency domain resource that carries the OFDM signal; and/or
    when the LP-WU symbol is an OFF symbol, skip sending a signal.

32. The apparatus according to any one of claims 22 to 31, wherein the processing unit is further configured to:

    determine a transmission resource of a third device, wherein the transmission resource of the third device comprises the wake-up signal receiving occasion of the second device; and
    send indication information to the third device, wherein the indication information indicates a resource element that carries a modulation signal of the third device on the wake-up signal receiving occasion of the second device, and a resource element when the LP-WU symbol is the ON symbol is the resource element that carries the modulation signal of the third device; and/or the indication information indicates a resource element that does not carry a modulation signal of the third device on the wake-up signal receiving occasion of the second device, and a resource element when the LP-WU symbol is the OFF symbol is the resource element that does not carry the modulation signal of the third device; and

the transceiver unit is further configured to:

send the modulation signal of the third device on the resource element when the LP-WU symbol is the ON symbol; and/or

skip sending the modulation signal of the third device on the resource element when the LP-WU symbol is the OFF symbol.

33. A communication apparatus, comprising:

a transceiver unit, configured to receive a wake-up sequence from a first device on a wake-up signal receiving occasion, wherein the wake-up sequence is a binary bit sequence, each bit of the wake-up sequence is modulated into one or more LP-WU symbols through on-off keying OOK, the wake-up signal receiving occasion comprises a wake-up signal receiving occasion frequency domain resource, and the wake-up signal receiving occasion frequency domain resource is adjacent to an edge of a transmission bandwidth of the first device in frequency domain; and

a processing unit, configured to determine wake-up information based on the wake-up sequence, wherein the wake-up information is used for waking up the apparatus, or is used for not waking up the apparatus.

34. The apparatus according to claim 33, wherein duration of one of the one or more LP-WU symbols is T1, and duration of a symbol that is of a primary communication link of the first device and that overlaps the LP-WU symbol in time domain is N*T1, wherein N is an integer greater than or equal to 1.

35. The apparatus according to claim 33 or 34, wherein the wake-up signal receiving occasion frequency domain resource is located in a system bandwidth of the first device; and

there is no guard band between the wake-up signal receiving occasion frequency domain resource and the edge of the transmission bandwidth of the first device.

36. The apparatus according to any one of claims 33 to 35, wherein the wake-up signal receiving occasion further comprises a wake-up signal receiving occasion time domain resource, the wake-up signal receiving occasion time domain resource comprises a first time domain resource and a second time domain resource, the first time domain resource and the second time domain resource do not overlap in time domain, and a frequency domain resource of the wake-up signal receiving occasion in the first time domain resource and a frequency domain resource of the wake-up signal receiving occasion in the second time domain resource are respectively located on two sides of the edge of the transmission bandwidth of the first device.

37. The apparatus according to any one of claims 33 to 36, wherein the processing unit is specifically configured to:

determine a correspondence between at least one wake-up sequence and at least one piece of wake-up information; and

determine the wake-up information based on the wake-up sequence and the correspondence between the at least one wake-up sequence and the at least one piece of wake-up information.

38. The apparatus according to claim 37, wherein the correspondence between the at least one wake-up sequence and the at least one type of wake-up information is related to an identity of a cell in which the first device is located.

39. The apparatus according to claim 37 or 38, wherein the at least one wake-up sequence is determined based on a same basic sequence, and a length of the basic sequence is M* 12 or a length of the basic sequence is K*14, wherein M and K are integers greater than or equal to 1.

40. The apparatus according to claim 39, wherein when the length of the basic sequence is 12 bits, the basic sequence is [001 001 110 101], [001 111 001 010], [010001 111 001], [010 100 111 100], [010 110 001 101], [010 110 100 011], or [010 111 001 001];

when the length of the basic sequence is 14 bits, the basic sequence is [010 101 111 001 00];

when the length of the basic sequence is 24 bits, the basic sequence is [010 101 100 100 101 111 000 110], [111 011 000 100 100 111 000 101], or [110 010 101 111 000 010 010 011];
when the length of the basic sequence is 28 bits, the basic sequence is [010 001 101 111 011 000 011 100 010 1]; or
when the length of the basic sequence is 36 bits, the basic sequence is [101 101 010 010 011 010 011 001 110 000 011 101] or [110 110 000 100 011 101 010 010 111 001 011 100].

41. The apparatus according to claim 39, wherein the basic sequence is a pseudo-random sequence, and an initial value of the pseudo-random sequence is related to one or more of the following:
the cell identity of the first device, a radio access network identity of the first device, a tracking area identity of the first device, an LP-WU identity of the apparatus, or a state of the apparatus.

42. A communication apparatus, comprising:

a transceiver unit, configured to receive indication information, wherein the indication information indicates a resource element that carries a modulation signal of the apparatus, and/or the indication information indicates a resource element that does not carry a modulation signal of the apparatus; and the resource element is located on a wake-up signal receiving occasion of a second device; and
a processing unit, configured to receive the modulation signal of the apparatus from a first device based on the indication information.

43. A communication apparatus, comprising a processor and a memory, wherein the processor is coupled to the memory, and the processor is configured to control the apparatus to implement the method according to any one of claims 1 to 11, or implement the method according to any one of claims 12 to 20, or implement the method according to claim 21.

44. A computer-readable storage medium, wherein the storage medium stores a computer program or instructions; and when the computer program or the instructions is/are executed by a computer, the method according to any one of claims 1 to 11 is implemented, or the method according to any one of claims 12 to 20 is implemented, or the method according to claim 21 is implemented.

45. A computer program product, wherein the computer program product comprises instructions; and when the instructions are run by a computer, the method according to any one of claims 1 to 11 is implemented, or the method according to any one of claims 12 to 20 is implemented, or the method according to claim 21 is implemented.

FIG. 1

200

FIG. 2

FIG. 3

400

| First device | | Second device |
|---|---|---|

S410: Determine wake-up information

S420: Determine a wake-up sequence based on the wake-up information

S430: Send the wake-up sequence to the second device on a wake-up signal receiving occasion of the second device

S440: Determine the wake-up information based on the wake-up sequence

FIG. 4

S4201: A first device determines at least one basic sequence

S4202: The first device determines at least one wake-up sequence based on any one of the at least one basic sequence

S4203: The first device determines, based on a service requirement, a target wake-up sequence that needs to be sent in the at least one wake-up sequence

FIG. 5

LP-WU transmission
channel     Transmission bandwidth

(a)

Transmission bandwidth    LP-WU transmission
channel

(b)

LP-WU transmission
channel    Transmission bandwidth    LP-WU transmission
channel

(c)

FIG. 6

LP-WU
transmission
channel    LP-WU
transmission
channel    Transmission
bandwidth    LP-WU
transmission
channel    LP-WU
transmission
channel

Frequency

FIG. 7

LP-WU transmission channel     Transmission     LP-WU transmission channel
bandwidth

(a)

LP-WU transmission channel             LP-WU transmission channel

Transmission bandwidth

(b)

FIG. 8

LP-WU   Guard      Transmission      Guard   LP-WU
transmission   band      bandwidth      band   transmission
channel             (a)           channel

LP-WU      Transmission      LP-WU
transmission    bandwidth     transmission
channel        (b)        channel

FIG. 9

FIG. 10

FIG. 11

FIG. 12

FIG. 13

Start time

Receiving occasion duration

Wake-up signal receiving cycle

Receiving occasion duration

Wake-up signal receiving cycle

System bandwidth

Transmission bandwidth

Sensing signal bandwidth

Wake-up signal bandwidth

Receiving occasion channel 18

Receiving occasion channel 17

Receiving occasion channel 16

...

Receiving occasion channel 1

Receiving occasion channel 0

Wake-up signal transmission bandwidth

Guard band

FIG. 14

FIG. 15

1600

S1610: A first device determines a transmission resource of a third device, where the transmission resource of the third device includes a wake-up signal receiving occasion of a second device

S1620: The first device sends indication information to the third device, where the indication information indicates a resource element that carries a modulation signal of the third device on the wake-up signal receiving occasion of the second device

S1630: The first device sends the modulation signal of the third device on a resource element when an LP-WU symbol is an ON symbol

FIG. 16

| | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |
|---|---|---|---|---|---|---|---|---|---|---|---|---|---|---|---|---|---|---|---|---|---|---|---|---|---|---|---|---|
| PRB 5 | | | | | | | | | | | | | | | | | | | | | | | | | | | | |
| PRB 4 | | | | | | | | | | | | | | | | | | | | | | | | | | | | |
| PRB 3 | | | | | | | | | | | | | | | | | | | | | | | | | | | | |
| PRB 2 | | | | | | | | | | | | | | | | | | | | | | | | | | | | |
| PRB 1 | 0 | 1 | 0 | 0 | 0 | 1 | 1 | 0 | 1 | 1 | 1 | 1 | 0 | 1 | 1 | 0 | 0 | 0 | 0 | 1 | 1 | 1 | 0 | 0 | 0 | 1 | 0 | 1 |
| PRB 0 | | | | | | | | | | | | | | | | | | | | | | | | | | | | |

FIG. 17

Communication apparatus 1800

Processing unit 1810

Transceiver unit 1820

FIG. 18

Communication apparatus 1900

Processor
1910

1940

Memory 1930

Communication
interface 1920

FIG. 19

FIG. 20

Terminal device 2100

2104

2111

2102 ~ Transceiver | Wi-Fi module ~ 2111

2101

2105

Power supply

2108

Speaker 2108a

Audio circuit

Memory

2103

Processor

Microphone 2108b

Camera

2109

Sensor ~ 2110

Input unit

2106

Display unit ~ 2107

FIG. 21

<div align="center">**INTERNATIONAL SEARCH REPORT**</div>

| International application No. |
| --- |
| **PCT/CN2023/083108** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, ENTXTC, VEN, CNABS: 带宽, 频率, 频域, 开关键控, 唤醒, 位置, 相邻, bandwidth, frequency, OOK, wake 1w up, WUS, location, position, adjacent, neighbouring

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110839214 A (BEIJING SPREADTRUM HIGH-TECH COMMUNICATIONS TECHNOLOGY CO., LTD.) 25 February 2020 (2020-02-25) description, paragraphs [0041] and [0061], and figures 1 and 2 | 1-45 |
| Y | US 2022070784 A1 (DATANG MOBILE COMMUNICATIONS EQUIPMENT CO., LTD.) 03 March 2022 (2022-03-03) description, paragraphs [0049] and [0161], and figures 5-7 | 1-45 |
| Y | US 2021219335 A1 (QUALCOMM INC.) 15 July 2021 (2021-07-15) description, paragraphs [0102]-[0110], and figures 3 and 4 | 1-45 |
| A | US 2020053647 A1 (LG ELECTRONICS INC.) 13 February 2020 (2020-02-13) entire document | 1-45 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **06 July 2023** | **10 July 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083108**

| Patent document cited in search report | | | Publication date (day/month/year) | Patent family member(s) | | | Publication date (day/month/year) |
|---|---|---|---|---|---|---|---|
| CN | 110839214 | A | 25 February 2020 | None | | | |
| US | 2022070784 | A1 | 03 March 2022 | KR | 20210109024 | A | 03 September 2021 |
| | | | | KR | 102470743 | B1 | 25 November 2022 |
| | | | | WO | 2020143543 | A1 | 16 July 2020 |
| | | | | EP | 3937547 | A1 | 12 January 2022 |
| | | | | EP | 3937547 | A4 | 29 June 2022 |
| | | | | TW | 202027541 | A | 16 July 2020 |
| | | | | TWI | 744764 | B | 01 November 2021 |
| US | 2021219335 | A1 | 15 July 2021 | WO | 2021145967 | A1 | 22 July 2021 |
| | | | | EP | 4091368 | A1 | 23 November 2022 |
| | | | | US | 11483860 | B2 | 25 October 2022 |
| US | 2020053647 | A1 | 13 February 2020 | US | 11218964 | B2 | 04 January 2022 |
| | | | | US | 2022124618 | A1 | 21 April 2022 |
| | | | | WO | 2018199652 | A1 | 01 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210326121X